(19) Europäisches Patentamt
European Patent Office
Office européen des brevets

(11) **EP 2 140 219 B1**

(12) **EUROPÄISCHE PATENTSCHRIFT**

(45) Veröffentlichungstag und Bekanntmachung des Hinweises auf die Patenterteilung:
**12.07.2023 Patentblatt 2023/28**

(21) Anmeldenummer: **08757927.2**

(22) Anmeldetag: **11.04.2008**

(51) Internationale Patentklassifikation (IPC):
**F28F 1/12** (2006.01)    **F28D 1/053** (2006.01)

(52) Gemeinsame Patentklassifikation (CPC):
**F28D 1/05366; B60H 1/00328; F28F 1/126;**
F28D 2021/0096

(86) Internationale Anmeldenummer:
**PCT/DE2008/000613**

(87) Internationale Veröffentlichungsnummer:
**WO 2008/125089 (23.10.2008 Gazette 2008/43)**

(54) **KRAFTFAHRZEUG**

MOTOR VEHICLE

VÉHICULES À MOTEUR

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **12.04.2007 DE 102007017567**
**03.01.2008 DE 102008003151**
**03.01.2008 DE 102008003149**

(43) Veröffentlichungstag der Anmeldung:
**06.01.2010 Patentblatt 2010/01**

(73) Patentinhaber: **AutomotiveThermoTech GmbH**
**51789 Lindlar (DE)**

(72) Erfinder: **HIMMELSBACH, Johann**
**51789 Lindlar (DE)**

(74) Vertreter: **Lippert Stachow Patentanwälte Rechtsanwälte**
**Partnerschaft mbB**
**Frankenforster Strasse 135-137**
**51427 Bergisch Gladbach (DE)**

(56) Entgegenhaltungen:
**EP-A- 0 255 313     EP-A- 0 710 811**
**DE-C2- 3 050 963     DE-U1- 20 010 994**
**US-A- 5 482 112**

**Beschreibung**

Die Erfindung bezieht sich auf ein Personenkraftfahrzeug mit einer Beheizung der Fahrzeugkabine über ein Klimagerät mit einem vom flüssigen Kühlmittel durchströmten Heizungswärmetauscher zur Klimatisierung der Fahrzeugkabine von in Großserie gefertigten Personenkraftfahrzeugen mit der Abwärme flüssigkeitsgekühlter Antriebskomponenten, insbesondere mit der Abwärme flüssigkeitsgekühlter Verbrennungskraftmaschinen, der eine gelötete Wärmeübertragungsmatrix aufweist sowie ein Verfahren zum Betrieb des Personenkraftfahrzeugs..

Ein weitverbreitetes Merkmal heutiger Personenkraftfahrzeuge ist es, dass diese speziell für Dieselfahrzeuge im Heiz-Klimagerät einen elektrischen PTC (Positive Temperature Coeffi-cient)-Zuheizer zur weiteren Erwärmung der vom Heizungswärmetauscher erwärmten Kabinenluft vorsehen. Bei baugleichem Basis-Heiz-Klimagerät erhält die Diesel-Variante bei dieser Vorgehensweise einen PTC-Zuheizer und die Variante mit Otto-Motor nicht. Um die nicht unerheblichen Kosten für den PTC-Zuheizer einzusparen wird bei den meisten Fahrzeugherstellern in den Diesel-Varianten je nach Fahrzeugmarkt bezüglich des serienmäßigen Zuheizer-Einbaus differenziert oder ein Zuheizer wird gar nur als Option angeboten.

Die jüngste Entwicklung bei Heiz-Klimageräten in PKW-Großserien-Anwendungen ist außerdem dadurch gekennzeichnet, dass immer kompaktere Heizungswärmetauscher zum Einsatz kommen. Insbesondere ist ein vermehrter Übergang zu gelöteten Wärmetauschern aus Aluminium festzustellen, bei denen die etwas höheren Fertigungskosten verglichen mit "gesteckten" oder auf andere Weise rein mechanisch, d.h. ohne Verlöten, gefügten Wärmetauschern bewusst in Kauf genommen werden, um Bauraum zu sparen.

Aus der US-Patentschrift 5,482,112 ist ein Kondensor mit einer gelöteten Matrix aus Aluminiumflachrohren bekannt, in dem ein gasförmiges Kühlmittel einer Kfz-Klimaanlage kondensiert wird. Das Dokument offenbart einen Heizungswärmetauscher mit den Merkmalen des Oberbegriffs von Anspruch 1.

Die allgemeinen Einschätzungen der Fachwelt, dass eine weitere Steigerung der Effizienz der Heizungswärmetauscher keine nennenswerten Vorteile bezüglich der Heizleistung bringt weil sich die Heizungswärmetauscher im allgemeinen in der thermischen Sättigung befinden, sowie dass speziell das Zusammenspiel von elektrischer PTC-Zuheizung und konventionellem Heizungswärmetauscher die kosteneffizienteste Erfüllung der Heizleistungs-Zielwerte bei Dieselfahrzeugen liefert, hat dazu geführt, dass viele PKW-Heiz-Klimageräte inzwischen einen weitgehend ähnlichen Aufbau aufweisen, mit Standard-Heizungswärmetauscher, nachgeschaltetem luftseitigem PTC-Zuheizer und luftseitiger Heizungsregelung. Insbesondere neue Fertigungstechnologien und Aluminium-Legierungen wurden vor diesem Hintergrund in den letzten Jahren primär dazu verwendet, den Bauraum für den Heizungswärmetauscher bzw. das Heiz-Klimagerät unter Beibehaltung des Heizungswärmetauscherwirkungsgrades weiter zu reduzieren.

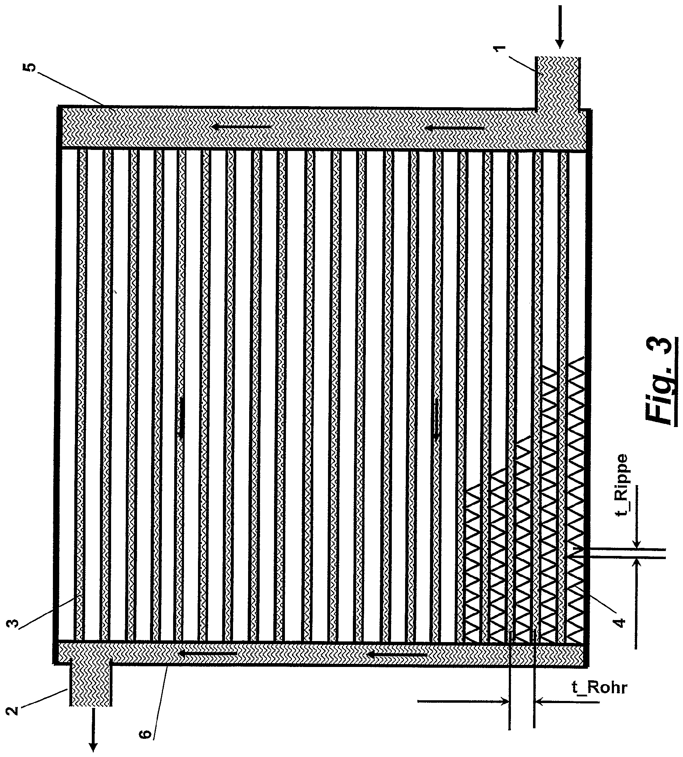

Bei gelöteten Vollaluminiumheizungswärmetauschern bei PKW liegt die Packungsdichte der kühlmittelseitigen Wärmeübertragungsrohre sowie der luftseitigen Wärmeübertragungsrippen inzwischen in vielen Anwendungen auf einem Niveau, wie es vor 10 Jahren noch kaum vorstellbar war. Die höchste derzeit bekannte Packungsdichte bei reinen PKW weisen in diesem Zusammenhang die Wärmetauscher des aktuellen 3er-BMW auf, mit einem Rohr-Mittenabstand t_Rohr von ca. (3,9+1 ,3=5,2mm) und einem (mittleren) Rippen-Mittenabstand t_Rippe von ca. 0,85 mm. Für die Definition von t_Rohr und t_Rippe im Rahmen der Erfindung zeigt Fig. 3 diese beiden Abmessungen in einem gelöteten Wärmetauscher mit Kühlmitteleinlass 1 und -auslass 2 sowie mit kühlmittelseitigen Flachrohren 3 und luftseitigen Rippen 4, welche über das Verlöten die Wärmetauschermatrix bilden. In Luftströmungsrichtung, d.h. senkrecht zur Bildebene in Fig. 3, soll für Weiterbildungen der Erfindung gelten, dass leere Zwischenräume zwischen einzelnen Wärmetauscherrohrgruppen in Luftströmungsrichtung zum Matrixvolumen zählen, sofern diese Zwischenräume von der Luft durchströmbar sind. Die bei Hochleistungs-PKW-Heizungswärmetauschern im allgemeinen unverzichtbaren luftseitigen Rippeneinschnitte (Louvres) sind dabei zur Vereinfachung nicht dargestellt. Das Volumen der Wärmetauschermatrix, d.h. das Volumen des von Luft durchströmten Wärmetauscherbereichs, beträgt hierbei ca. 0,98 l, die Bautiefe der Matrix in Luftströmungsrichtung ca. 27 mm. Der Wasserkasten erhöht die Heizungswärmetauscherbautiefe dieses typischen Fahrzeugvertreters der gehobenen Mittelklasse, d.h. bereits mit etwas gehobenen Ansprüchen an den Heizkomfort, dann letztlich auf 32 mm.

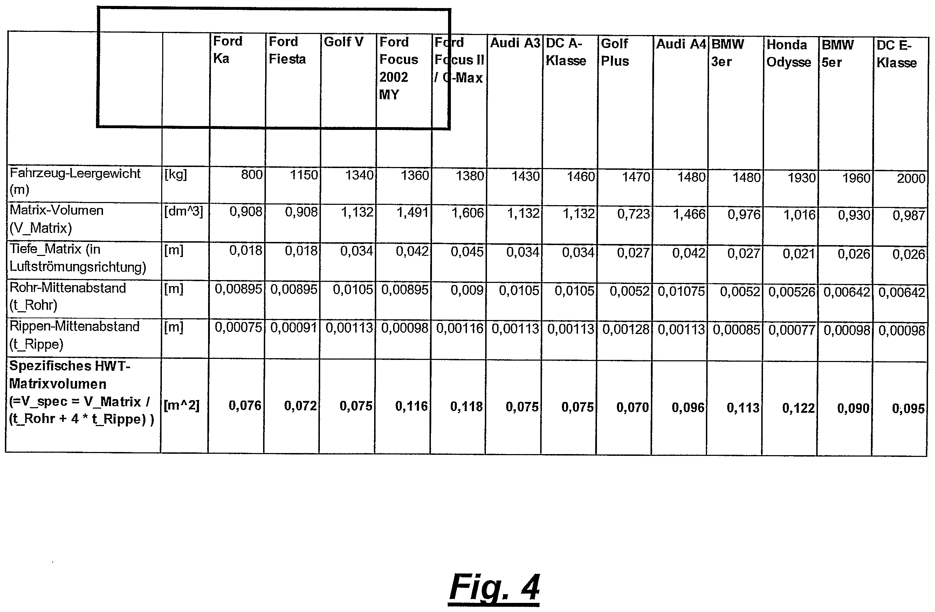

Die Heizungswärmetauscher anderer Volumenhersteller in der gleichen Fahrzeugklasse weisen bei etwas geringerer Packungsdichte der Flachrohre und Rippen ein geringfügig größeres Matrix-Volumen der Heizungswärmetauscher auf, doch auch hier ist der Trend zu höherer Packungsdichte der Matrix bzw. nach kleinerem Bauvolumen unübersehbar. Waren noch bis vor 10 Jahren bei gelöteten Heizungswärmetauschern Bauvolumina von ca. 1,2-1,5 I Matrixvolumen in der Golf-Klasse sowie auch in der gehobenen Mittelklasse durchaus üblich, so liegt heute der entsprechende Wert bei neuen Fahrzeuganwendungen in der Regel bei etwa 0,7-1,1 I. Weniger kompakte gelötete Heizungswärmetauscher mit einem Flachrohrmittenabstand von mehr als 7 mm sind speziell bei ganz neuen Fahrzeuganwendungen nur noch in Ausnahmefällen zu finden. Die später noch näher diskutierte Tabelle in Fig. 4 zeigt in diesem Zusammenhang einen Überblick bezüglich der Dimensionen typischer PKW-Heizungswärmetauscher wie sie heute in der Grosserie bevorzugt verbaut werden, wobei der dort zusätzlich gezeigte Honda Odyssee bereits zum Segment der Großraumlimousinen (Vans) zu zählen ist.

Allen bekannten Heiz-Klimageräten ist gemeinsam, dass PTC-Zuheizer in Verbindung mit gelöteten wie bei "gesteckten" Heizungswärmetauschern erhebliche Zusatzkosten verursachen: Zum einen bei Fahrzeugen mit Dieselmotor, für den Einbau der PTC-Zuheizerkomponenten, zum anderen aber auch bei Fahrzeugen mit Ottomotor, d.h. bisher in der Regel ohne PTC-Zuheizer: Dort entstehen PTC-bedingte Zusatzkosten, z.B. um am baugleichen Basis-Heiz-Klimagerät den Bauraum und die Randbedingungen für die el. Zuheizung für die Dieselvarianten vorzusehen. Hinzu kommt ein erheblicher Kraftstoffmehrverbrauch in allen Betriebssituationen, in denen der PTC-Zuheizer in Betrieb ist. Alternative heute in Großserien-PKW eingesetzte Zuheizkonzepte sind relativ zum PTC-Zuheizer entweder durch einen noch höheren Kraftstoffvermehrverbrauch und/oder noch höhere Zusatzkosten gekennzeichnet.

Dem gegenüber besteht die Aufgabe, ein Personenkraftfahrzeug mit Wärmetauscher bereitzustellen, das als Alternative zum heutig eingesetzten Wärmetauscher- oder Heiz-Klimageräte-Standard in Diesel-PKWs nicht nur die Heizleistungs-Zielwerte liefert, sondern dabei gleichzeitig reduzierte Fertigungsgesamtkosten und einen reduzierten Kraftstoffverbrauch ermöglicht. Das Personenkraftfahrzeug und das Verfahren nach den unabhängigen Patentansprüchen lösen diese Aufgabe.

Das Personenkraftfahrzeug gemäß der Erfindung beinhaltet eine hocheffiziente und kostengünstige Fahrzeugheizung unter Verzicht auf einen PTC-Zuheizer für Dieselfahrzeuge aufbauen, welche auf der weitgehenden Verwendung bereits am Markt verfügbarer Fertigungstechnologien und Halbzeuge für Hochleistungsheizungswärmetauscher mit gelöteter Wärmeübertragungsmatrix basiert, d.h. auf kühlmittelseitigen Flachrohren und luftseitigen Rippen mit einer Vielzahl in Luftströmungsrichtung nacheinander folgender turbulenzerzeugender Einschnitte (Louvres).

Der eingesetzte Wärmetauscher oder das Heiz-Klimagerät sind somit vorzugsweise einem Dieselfahrzeug zugeordnet oder in einem solchen eingebaut, welches vorzugsweise keinen in Bezug auf den Wärmetauscher luftseitigen oder insgesamt keinen PTC-Zusatzheizer oder sonstigen Zusatzheizer aufweist. Gemäß der Erfindung übersteigt das spezifische Wärmetauschervolumen V _Spec einen unteren Grenzwert von 0,180 $m^2$, oder vorzugsweise von 0,20 oder 0,25 $m^2$.

Die luftseitigen Strömungskanäle werden hierbei gebildet aus den dem Kühlmittel abgewandten Oberflächen der kühlmittelseitigen Wärmetauscher-Kanäle und daran angelöteten luftseitigen Metallrippen mit einer Vielzahl turbulenzerzeugender Einschnitte der luftseitigen Wärmeübertragungsrippen quer zur Luftströmung.

Eine Weiterbildung der Erfindung ist ein Personenkraftfahrzeug nach Anspruch 1 in Kombination mit einem Heiz-Klimagerät, welches vordere Luftausströmer aufweist, die mittels des Klimagerätes erwärmte Luft einem Fußraum der Fahrzeugkabine des Fahrzeuges zuleiten, und welches einen Wärmetauscher aufweist, der derart ausgebildet ist, dass er in dem für die Heizung besonders relevanten Betriebspunkt mit -20°C Lufteintrittstemperatur ($T_{Luft,HWT-Eintritt}$), 50°C Kühlmitteleintrittstemperatur ($T_{Kühlmittel,HWT-Eintritt}$), einem Heizungsluftmassenstrom von 5 kg/min und bei 5 l/min Kühlmitteldurchsatz bei Fokussierung des Luftmassenstroms und damit der Heizleistung auf die Fußausströmer eine so hohe mittlere Luftaustrittstemperatur an den vorderen Fussausströmern ($T_{Luft,Fussausströmer,vorne}$) erreicht, dass der Gesamt-Wärmenutzungsgrad Phi, gebildet mit der Gleichung

$$Phi = 100 * (T_{Luft,Fussausströmer,vorne} - T_{Luft,HWT-Eintritt}) / (T_{Kühlmittel,HWT-Eintritt} - T_{Luft,HWT-Eintritt})$$

ohne luftseitige Zuheizer einen Wert von 85%, von 90% oder von 95% übersteigt. Dies kann durch eine geeignete Auswahl des spezifischen Wärmetauschervolumens V_Spec erreicht werden, wobei die Temperaturregelklappen des Heizgeräts mit ausreichender Dichtigkeit auszubilden sind, um Leckagestellen zu vermeiden und heizgeräteseitige Verluste zu minimieren. Der Wärmetauscher des Klimagerätes weist hierbei vorzugsweise eine gelötete Wärmeübertragungsmatrix auf, die von der Heizungsluft umströmbar ist und die kühlmittelseitige Flachrohre und luftseitige Rippen mit einer Vielzahl in Luftströmungsrichtung nacheinander folgender turblulenzerzeugender Einschnitten aufweist oder aus diesen besteht. Die Wärmeübertragungsmatrix ist derart ausgebildet, dass das spezifische Wärmtauschervolumen V Spec, gebildet mit der Gleichung V_Spec = V Matrix / (t_Rohr + (4 * t_Rippe)), einen unteren Grenzwert von 0,180 $m^2$ übersteigt. Das Heiz-Klimagerät ist insbesondere zur Klimatisierung der Fahrzeugkabinen von Personenkraftfahrzeugen unterhalb 2000 kg Leergewicht innerhalb einer Fahrzeugplattform mit mehr als 50.000 Fahrzeugen pro Jahr einsetzbar, wobei die Klimatisierung mit der Abwärme der flüssigkeitsgekühlten Antriebsmaschine und/oder deren Komponenten oder anderen Wärmequellen des Kühl- und/oder Heizkreislaufs erfolgen kann.

Alternativ wird in einer besonders bevorzugten Verfeinerung das System dahin getrimmt, dass der Gesamt-Wärmenutzungsgrad Phi gemäß obiger Definition und bei den obigen charakteristischen Betriebstemperaturen von -20°C Lufteintrittstemperatur und +50°C Kühlmitteleintrittstemperatur bei einem Fahrgeschwindigkeitsprofil gemäß MVEGA bei allen Fahrgeschwindigkeiten einschließlich des Leerlaufs ohne luftseitige Zuheizer oberhalb von 80% bleibt.

Angesichts der Wärmeverluste im Heizgerät setzen diese Vorgaben bei PKW-typischen Heizgeräten einen extrem leistungsfähigen Heizungswärmetauscher mit vergrößertem Bauraum voraus. Bei entsprechender Anpassung des Kühlkreislaufs in Bezug auf die Kühlmittelleitungsführung und den Durchfluss kann bei Erfüllung dieser Eckpunkte der heute in sehr vielen Dieselfahrzeugen zu findende PTC-Zuheizer eingespart werden, verbunden nicht nur mit der Einsparung an Fertigungskosten, sondern verbunden auch mit 0,5-1,0 l/100km Kraftstoffeinsparung relativ zum Betrieb mit PTC-Zuheizer und gleicher Heizleistung.

Dabei ist das eingesetzte Heiz-Klimagerät im allgemeinen sowohl dann kosteneffizient, wenn nur die Dieselfahrzeuge einer Fahrzeugplattform für sich alleine betrachtet werden, als auch dann, wenn sowohl Otto- und Dieselfahrzeuge das gleiche Heiz-Klimagerät erhalten und die gemeinsamen Kosten in der Fahrzeugplattform betrachtet werden. Dies ist insbesondere vor dem Hintergrund von Gleichteile-Strategien innerhalb von Fahrzeug-Plattformen und z.T. auch über die Plattformgrenzen hinweg sehr vorteilhaft. Alle bisher am Markt bekannten anderen Technologien, um den PTC-Zuheizer einzusparen, können hier bereits kostenmäßig in keiner Weise konkurrieren, ganz zu schweigen vom Kraftstoffverbrauch. Bei gleichem Heiz-Klimagerät für Otto- und Dieselfahrzeugen ist eine "Best in Class" Heizleistung bei den Fahrzeugen mit Ottomotor ein willkommener Zusatzvorteil, trotz der Gesamtkostenvorteile für die gesamte Plattform.

Durch die Erfindung wird somit ein überaus weit verbreitetes Problem überraschenderweise erstmalig gelöst. So erscheint es vor dem Hintergrund des allgemeinen Trends hin zu kleineren Heiz-Klimageräten und kleinerem Bauraum für die Heizungswärmetauscher und hin zu Motoren mit immer weniger Abwärme für Heizzwecke auf den ersten Blick als wenig zielführend, den Bauraum für den im Hinblick auf die Erfüllung der Erfordernisse der Heizung als besonders kosteneffizient geltenden PTC-Zuheizer aufzugeben und einen vermeintlich überdimensionierten Heizungswärmetauscher unter Ausnutzung des PTC-Bauraums und unter Ausnutzung der Bauraumeffizienz aber auch der Mehrkosten der modernsten Fertigungstechnologien für gelötete Heizungswärmtauscher zu verwenden. Ganz besonders die Aufgabe des PTC-Bauraums scheint hierbei zunächst ein großer Fehler zu sein. Im Gegensatz zur allgemeinen Expertenmeinung zeigt aber der Umbau von Serien-Fahrzeugen auf den eingesetzter Wärmetauscher und das Heiz-Klimagerät, dass das Heiz-Klimagerät bei geeigneter Anpassung des Kühlmittelkreislaufs und der lokalen Durchflüsse durch den Heizungswärmetauscher und die übrigen Wärmequellen und Wärmesenken im Motorkühlsystem sehr wohl in der Lage ist, die gleiche Heizleistung zu liefern, wie heutige Serienfahrzeuge mit teuren PTC-Zuheizern. Messungen im Klima-Windkanal und auf der Straße belegen hierbei nicht nur eine ausreichende Kabinenheizleistung, sondern auch bisher nicht für möglich gehaltene Kraftstoffverbrauchseinsparungen bei gleichzeitiger Senkung der Kosten des Heiz-Klimageräts.

Maßgeblich für den Schritt zum eingesetzten Heiz-Klimagerät ist hierbei zum einen die Erkenntnis, dass es überraschenderweise wirklich möglich ist, auf den PTC-Zuheizer zu verzichten, wodurch es erst möglich wird, bei bestehenden Fahrzeugkonzepten Bauraum für den vermeintlich übergroßen Heizungswärmetauscher zu gewinnen, der dazu genutzt werden kann, den Heizungswärmetauscher noch effizienter zu machen. Die höhere Bautiefe in Luftströmungsrichtung ermöglicht hierbei wahlweise eine gewisse Reduktion des kühlmittelseitigen Druckverlustes und daran gekoppelt einen etwas höheren Kühlmitteldurchsatz, bevorzugt jedoch in den meisten Anwendungen strömungsvergleichmäßigenden Sekundärmaßnahmen für eine besonders gleichmäßige Wärmetauscherbeaufschlagung mit Kühlmittel und/oder eine Erhöhung der Strömungsgeschwindigkeit in den Wärmetauscherrohren zur Verbesserung des kühlmittelseitigen Wärmeübergangs und/oder bei Bedarf den Übergang zur besonders effizienten Kreuz-Gegenstrombauweise. Dabei wird es bei sehr vielen Anwendungen am effizientesten sein, mit geringeren Kühlmitteldurchsätzen durch den Heizungswärmetauscher zu arbeiten als es dem heutigen Serienstandard entspricht. In diesem Zusammenhang sei insbesondere auf die Heizleistungsvorteile verwiesen, die sich vielfach ergeben, wenn die thermische Spreizung des Kühlmittels am Heizungswärmetauscher und gegebenenfalls auch am Motor durch Absenkung des Kühlmitteldurchflusses durch den Motor und/oder den Heizungswärmetauscher ohne nennenswerte Einbuße an Heizungswärmetauscherwirkungsgrad erhöht wird.

Ein Personenkraftfahrzeug mit erfindungsgemäß eingesetztem Hochleistungswärmetauscher wird aufgrund seiner hohen Effizienz, bei Bedarf aber auch durch die weitere Absenkung der Heizungsrücklauftemperatur durch kühlmitteldurchflussbegrenzende Maßnahmen, letztlich dazu führen, dass das Kühlmittel, die Motorbauteile und oftmals auch das Motoröl - im Mittel über das Gesamtsystem - weniger stark aufgeheizt werden als bei einem konventionellen Heizgerät mit PTC-Zuheizer und gleicher Wärmeabgabe an die Kabinenluft. Durch geringere Oberflächenwärmeverluste und eine geringere Energie zum Aufheizen der wärmeaktiven Massen kann das Heiz-Klimagerät eine stark verbesserte Heizwirkung aufweisen.

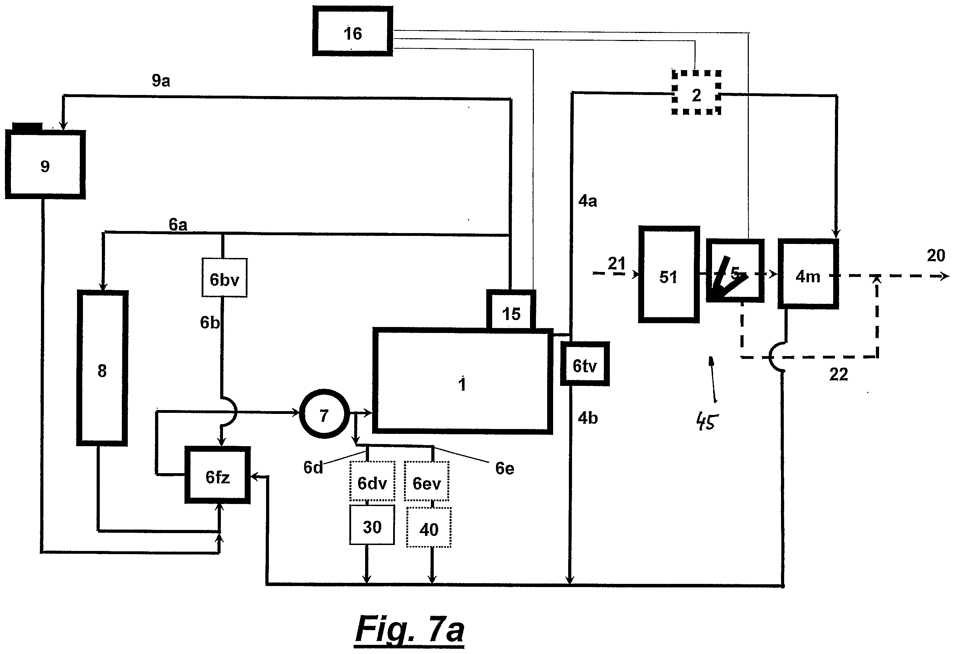

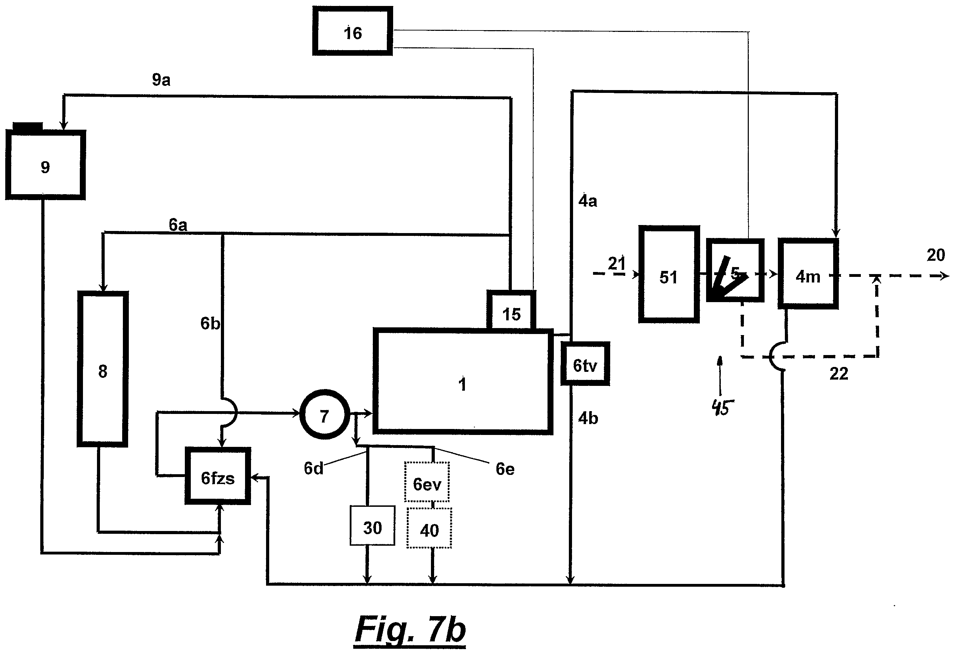

Dabei ist es ein ausgesprochener Vorteil des eingesetzten Wärmetauschers und Heiz-Klimageräts mit der Vergrößerung des Heizungswärmetauscherbauvolumens, dass es selbst bei einer Reihenschaltung von zwei oder mehr Kreuzgegenstrom-Stufen mit dem Druckangebot konventioneller Motorkühlmittelpumpen auskommt. Dies gilt ganz besonders für Anwendungen, in denen der Motor ohne Kühler-Bypass, d.h. z.B. ohne den Zweig 6b in Fig. 7a, auskommt oder in denen der Kühler-Bypass beispielsweise bei hohem Heizbedarf mittels eines Spezial-Kühlerthermostaten 6fzs anstelle des konventionellen Thermostaten 6fz oder mittels eines Zusatzventils 6bv geschlossen gehalten wird. In einer ganz besonders kosteneffektiven Vereinfachung des Systems entfällt gemäß Fig. 7b das externe Durchflusskontrollorgan 2, sowie der Motorölkühlerthermostat 6dv und anstelle des Bypassventils 6bv kommt ein Spezialthermostat 6fzs zum Einsatz, wobei die Spezialthermostate als doppeltwirkende Thermostate ausgebildet sind und einen Bypassteller mit einem derart verlängerten Federweg aufweist, dass dieser den Bypasszweig 6b bei geschlossenem Kühlerzweig federbelastet schließt. Bei hohen Motordrehzahlen öffnet der Saugdruck der Motorkühlmittelpumpe 7 den Bypasszweig 6b und sorgt für eine ausreichende Motorkühlung. In dieser Auslegung definieren die Heizungswärmetauscherauslegung und die Kühlmittelverschlauchung in Verbindung mit der Öffnungscharakteristik des Bypassfeder-Tellers im Spezial-Kühlerthermostaten 6fzs den Kühlmitteldurchsatz durch den Heizungswärmetauscher. Wie bereits in Fig. 7a stellt auch in Fig.7b ein Thermostatventil 6tv sicher, dass der Kühlerthermostat 6fzs bei zu hoher Kühlmitteltemperatur auch bei starker Wärmeentnahme am Heizungswärmetauscher stets sicher öffnet. Bei voll geöffnetem Kühlerzweig 6a, schließt der Bypassteller des Spezialthermostaten 6fzs den Bypasszweig 6b wie bei konventionellen Thermostaten. Im Übrigen weist das in Fig. 7a, b schematisch dargestellte Motor- und Fahrzeugkühlsystem für den Motor 1 mit Wärmetauscher eine Kühlmittelpumpe 7, einen Fahrzeugkühler 8, einen Ausgleichbehälter 9 und ein Motorsteuergerät 16 auf, die durch die dargestellten Leitungen miteinander verbunden sind. Weiterhin sind vorgesehen ein Motortemperatursensor 15, ein Motorölkühler 30 mit Thermostat 6dv und ein Getriebeölkühler 40 mit Thermostat 6ev. Das Heiz-Klimagerät 45 weist zwischen dem Wärmetauscher 4m zugeordneten Lufteintritt 21 und Luftaustritt 20 einen Verdampfer 51 und eine Temperaturmischklappe 5 auf, die dem Wärmetauscher vorgeschaltet sind, wobei der Wärmetauscher 4m durch einen Bypass 22 zur Mischtemperatureinstellung umgangen werden kann. Bei geringen Motordrehzahlen und Kühlmitteltemperaturen unterhalb der Thermostatöffnungstemperaturen des Spezialkühlerthermostaten 6fzs und des Zusatzthermostatventils 6tv, d.h. bei geschlossenem Zweigen 4b, 6a und 6b, liefert diese Vorgehensweise insbesondere eine gewisse Druckreserve, so dass der Heizungskühlmitteldurchfluss im Leerlauf von typischerweise 800-1.000 Umin$^{-1}$ oder im leerlaufnahen Drehzahlbereich (beispielsweise bei Drehzahlen bis 10% oder bis 15-20% oder bis 25-50% oberhalb der Leerlaufdrehzahl) auch bei etwas höherem Druckverlust des Heizungswärmetauschers im wesentlichen nicht oder nicht allzu sehr abnimmt. Dies erweitert den Auslegungsspielraum für wärmeübergangssteigernde konstruktive Maßnahmen am Heizungswärmetauscher und auch zur Erhöhung der thermischen Spreizung sowohl am Heizungswärmetauscher als auch am Motor einschließlich der effektiven Nutzung des Motorölkühlers zur Heizwärmegenerierung in ganz erheblichem Maße. Die zu diesem besonders wirksamen und sehr preiswerten Gesamtsystem mit Spezialthermostat 6fzs gehörigen physikalischen Wechselwirkungen werden in früheren Schutzrechtsanmeldungen des gleichnamigen Erfinders bereits ausgiebig beschrieben. Dort finden sich auch weitere Verschlauchungsbeispiele mit verschiedenen Auslegungsschwerpunkten.

Der eingesetzte gelötete Wärmetauscher weist möglichst kleine Rippen- und/oder Rohr-Mittenabstände auf. Alternativ oder zusätzlich weist der Wärmetauscher möglichst kleine Kanalhöhen und/oder Wandstärken der Flachrohrkühlmittelkanäle auf. Hierbei ist vorzugsweise der Heizungswärmetauscher so groß wie irgend möglich auszugestalten und gegebenenfalls sogar der vermeintlich unverzichtbare PTC-Bauraum zu nutzen, wobei bei Bedarf auch keine alternativen Zuheizmöglichkeit vorgesehen werden.

Das erfindungsgemäße Personenkraftfahrzeug mit Wärmetauscher oder das diesen enthaltende Heiz-Klimagerät hat sich als besonders effektiv bei Großserienanwendungen in PKW unterhalb 2000 kg Leergewicht herausgestellt. Als Grosserie sei hierbei eine Jahresproduktion von mehr als 50.000 Fahrzeugen pro Jahr verstanden, die alle das gleiche Heizgerät bzw. den gleichen Wärmetauscher enthalten. Im echten Volumensegment kommen die Vorteile dieser Erfindung besonders zum Tragen, insbesondere bei gelöteten Aluminiumheizungswärmetauschern.

Die Vorgehensweise zielt im Gegensatz zum Stand der Technik darauf ab, zum einen möglichst bauraumeffiziente gelötete Heizungswärmetauscher zu verwenden und zum anderen das Heizungswärmetauschervolumen wesentlich größer zu wählen, als dies beim Übergang auf gelötete Aluminiumheizungswärmetauscher bisher erfolgt ist. Entgegen der heutigen Vorgehensweise sämtlicher Hersteller, möglichst kleinvolumige und besonders preiswerte Heizungswärmetauscher zu verwenden und damit am Heizungswärmetauscher Kosten zu sparen, wird mit der vorliegenden Erfindung bewusst ein entgegengesetzter Weg beschritten, wobei entgegen wenig effizienten gestreckten Wärmetauschern wie z.B. bei VW Golf 2 und 3 lange Jahre üblich, hocheffiziente gelötete Wärmetauscher, insbesondere aus Aluminium, eingesetzt werden.

Als Vergleichsbasis heutiger Fahrzeuge mit typischen Vertretern gelöteter Heizungswärmetauscher zeigt in diesem Zusammenhang Fig. 4. eine Tabelle mit einigen charakteristischen Merkmalen zu Klassifizierung. Die großvolumigsten gelöteten Wärmetauscher weisen hierbei ca. 1,5 l bzw. 1,6 l Matrixvolumen auf, allerdings mit relativ grobmaschigem Abstand der kühlmittelseitigen Flachrohre von ca. 9 bzw. 10,5 mm. Speziell bei den neueren Heizungswärmetauscherdesigns mit besonders kleinen Rohr-Mittenabständen t_Rohr und Rippenmittenabständen t_Rippe geht das Matrixvolumen in der Golfklasse z.T. inzwischen herab bis auf Werte von ca. 0,7 l. Und selbst bei den größeren Fahrzeugen wie 3er und 5er BMW bzw. Mercedes E-Klasse weist die Heizungswärmetauschermatrix angesichts der Fertigungsfortschritte bezüglich der Verfeinerung der Rohre und Rippen inzwischen nur noch etwa 1 l auf. Die Machbarkeit kleinerer Rohrmittenabstände t_Rohr bei gleichzeitig kleinen Mittenabständen t_Rippe der luftseitigen Verrippung sind der maßgebliche Grund dafür, dass die Verkleinerung des Wärmetauschermatrixvolumens in PKW-Großserienanwendungen möglich und auch in der Praxis umgesetzt wurde.

Die als "spezifisches Wärmetauschervolumen" gebildete Kennzahl V_Spec, gebildet mit der Gleichung V_Spec = V_Matrix / (t_Rohr + (4 * t_Rippe)), reflektiert diesen Sachverhalt. Indirekt ist darin auch die Tatsache enthalten, dass es inzwischen technisch und wirtschaftlich möglich ist, auch sehr dünnwandige Materialien für die Rippen und Rohre zu verwenden und auch sehr geringe kühlmittelseitige Kanalhöhen zu realisieren.

Die Betrachtung typischer gelöteter PKW-Heizungswärmetauscher in Fig. 4 zeigt, dass das spezifische Wärmetauschervolumen V_Spec, gebildet mit der Gleichung V_Spec = V_Matrix / (t_Rohr + (4 * t_Rippe)), in typischen PKW-Großserienanwendungen einen oberen Grenzwert von 0,118 $m^2$ nicht übersteigt und dass dieser Wert selbst beim größten dem Erfinder bekannten Wert an einem Wärmetauscher in einem Mini-Van 0,122 $m^2$ nicht übersteigt. Betrachtet man neben dem Ford Focus - hier sind wegen des grundsätzlichen Verzichts auf einen motorseitigen Kühlerbypass 6b bei manchen Motoren dieses Fahrzeugtyps motorspezifische Belange der maßgebliche Treiber für die Heizungswärmetauschergröße - die übrigen Fahrzeuge der Golfklasse, so liegt der aktuelle Großserienwert für das spezifische Wärmetauschervolumen V_Spec eher in der Größenordnung von.0,07-0,08 $m^2$. Die Kenngröße V_Spec liegt bei den etwas größeren und teureren Fahrzeugen und insbesondere auch mit etwas gehobenem Komfortanspruch, wie z.B. Audi A4, 3er und 5er BMW sowie Mercedes E-Klasse, mit ca. 1,0 l etwas höher, aber deutlich unterhalb des Ford Focus.

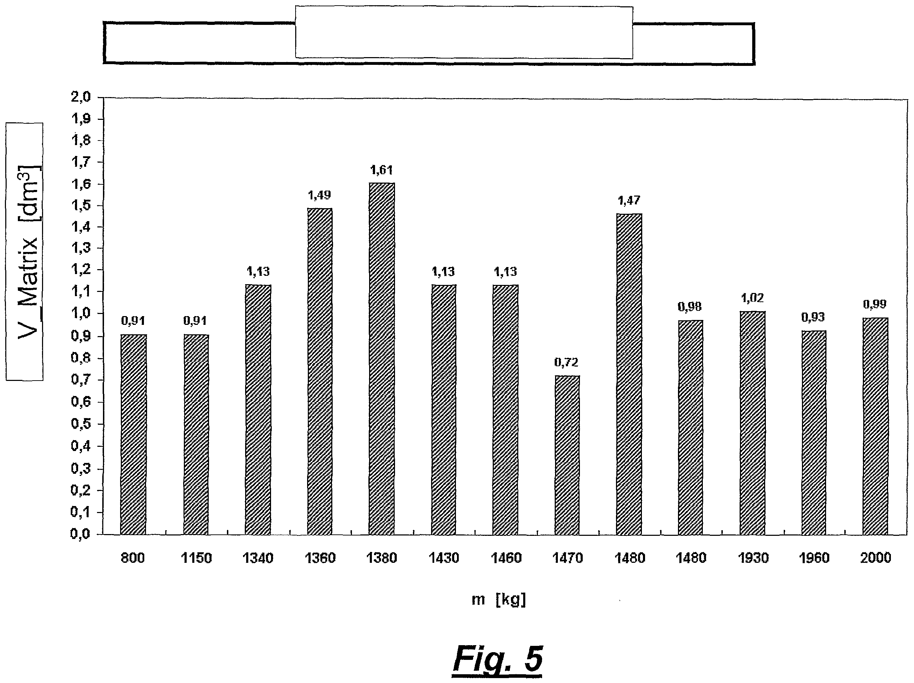

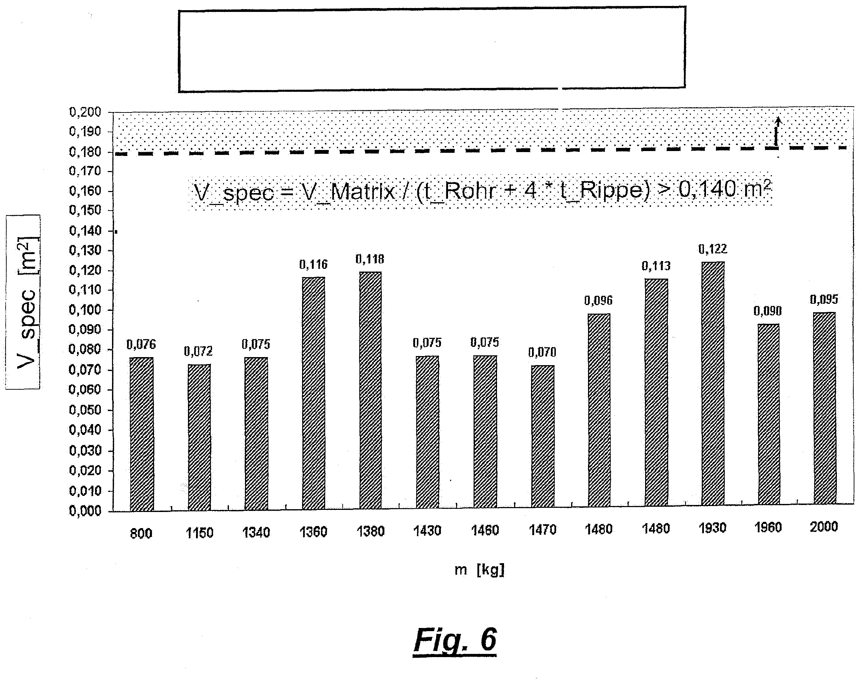

Bei Beibehaltung der luftseitigen Rippen und der Kühlmittelflachrohre führt die Vorgehensweise in der Regel auf Heizungswärmetauscher die 1,5 bis 2,5 mal so viel Heizungswärmetauschermatrixvolumen aufweisen, wie die entsprechenden derzeitigen Serienanwendungen. Fig. 5 und Fig. 6 zeigen in diesem Zusammenhang für die Daten aus Fig. 4 noch einmal graphisch auf, wie der Übergang von einer reinen Betrachtung des Wärmetauschermatrixvolumens V_Matrix gemäß Fig. 5 auf eine spezifische Betrachtung der Wärmetauschermatrix mit der Kenngröße V_spec speziell im Bezug auf die SerienHeizungswärmetauscher aus Fig. 4 einzuordnen ist.

Vorteilhafte Weiterbildungen ergeben sich aus den Unteransprüchen.

Das Matrix-Volumen V_Matrix des eingesetzten Wärmetauschers kann ≥ 1-1,25 l oder ≥ 1,3 -1,4 l betragen, beispielsweise ≥ 1,5-1,75 l oder ≥ 1,8-2,0, insbesondere auch ≥ 2,25 -2,5 l. Das Matrix-Volumen V_Matrix kann ≤ 4-5l oder ≤ 3-3,5l betragen, beispielsweise ≤ 3, 25-3,0l oder auch ≤ 2,5 - 2,75 l, ohne hierauf beschränkt zu sein. Vorzugsweise liegt das Volumen der Heizungswärmetauschermatrix im Bereich zwischen 1,4 l und 2,5 l.

Der Mittenabstand der luftseitigen Wärmetauscherrippen t_Rippe kann ≤ 1,1-1,25 mm, vorzugsweise ≤ 0,9-1 mm, besonders bevorzugt ≤ 0,7-0,8 mm sein. Der Mittenabstand der luftseitigen Wärmetauscherrippen t_Rippe kann ≥ 0,2-0,25 mm, ≥ 0,3-0,4 mm oder ≥ 0,5-0,6 mm sein, ohne hierauf beschränkt zu sein. Der Mittenabstand ist hierbei der Abstand der Rippen auf Höhe deren Mitten, d.h. mittig zwischen gegenüberliegenden Rohren. Der Mittenabstand entspricht somit auch der Länge der berippten Rohrabschnitte geteilt durch die Anzahl der in diesem Abschnitt vorgesehenen Rippen. Sofern der Rippenabstand variiert, beispielsweise wenn unterschiedliche Rohre oder Rohrabschnitte mit unterschiedlichen Rippenmittenabständen vorgesehen sind, ist auf den mittleren Rippenmittenabstand Bezug zu nehmen.

Auf Figur 3 und die obigen Ausführungen hierzu wird hiermit Bezug genommen.

Der Rohr Mittenabstand t_Rohr kann ≤ 15-17,5 mm, insbesondere ≤ 12-13 mm oder auch sein ≤ 11 mm oder ≤ 7-0 mm sein. Der Rohr-Mittenabstand t_Rohr kann ≥ 2-3 mm oder ≥ 4-5 mm sein, beispielsweise ≥ 5-6 mm oder ≥ 7-8 mm sein, ohne hierauf beschränkt zu sein. Der Mittenabstand ist hierbei der Abstand der Rohrmitten. Sofern der Rohrmittenabstand variiert, beispielsweise Bereiche mit unterschiedlichen Rohrmittenabständen vorgesehen sind, ist auf den mittleren Rohrmittenabstand Bezug zu nehmen.

Die Kanalhöhe der kühlmittelseitigen Flachrohrströmungskanäle kann ≤ 2,5-2,75 mm oder ≤ 2-2,25 mm betragen, insbesondere ≤ 1,75-1,8 mm oder auch ≤ 1,5-1,25 mm oder ≤ 1 mm sein. Die Kanalhöhe kann ≥ 0,3-0,5 mm oder ≥ 0,6-0,75 mm sein, beispielsweise ≥ 0,8-0,90 mm, ohne hierauf beschränkt zu sein. Die Kanalhöhe ist hierbei die Dimension des Rohrquerschnittes mit der *kleineren* Abmessung gegenüber der Kanalbreite.

Insbesondere kann der (ggf. mittlere) Rohrmittenabstand t_Rohr der parallel durchströmten kühlmittelseitigen Strömungskanäle weniger als 7 mm betragen und/oder der (ggf. mittlere) Mittenabstand der parallel durchströmten luftseitigen Wärmeübertragungsrippen weniger als 1 mm betragen. Es können auch die kühlmittelseitigen Strömungskanäle als flachrohrartige Kanäle mit weniger als 1 mm Kanalhöhe ausgebildet sein und/oder der (ggf. mittlere) Rohrmittenabstand t_Rohr der parallel durchströmten kühlmittelseitigen Strömungskanäle weniger als 7 mm betragen. Es können auch die kühlmittelseitigen Strömungskanäle als Flachrohrströmungskanäle mit weniger als 1 mm Kanalhöhe ausgebildet sein und/oder der (ggf. mittlere) Mittenabstand der parallel durchströmten luftseitigen Wärmeübertragungsrippen weniger als 1 mm betragen. Es können auch der Rohrmittenabstand, der Rippenmittenabstand und die Kanalhöhe in Kombination wie hier angegeben ausgebildet sein.

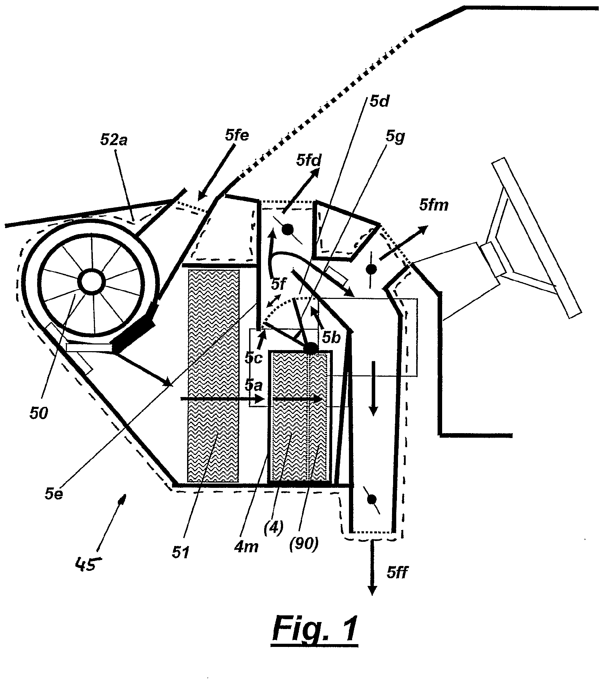

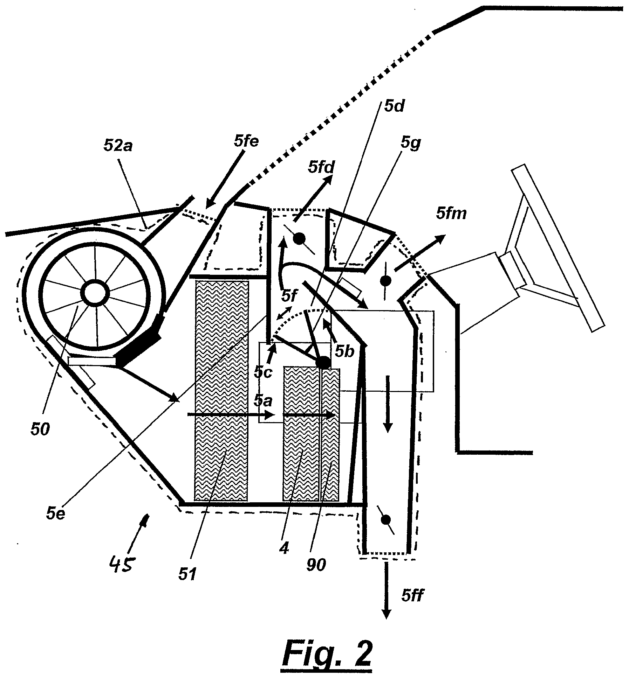

Fig. 1 zeigt innerhalb der Systemgrenze 52a ein typisches Heizgerät 45, wie es heute in Großserien-PKW zum Einsatz kommt mit der Änderung. In diesem Ausführungsbeispiel saugt ein Gebläse 50 Frischluft über den Einlass 5fe an und fördert diese über den Verdampfer 51 der Klimaanlage und im Heizbetrieb bei Wärmedefizit, d.h. bei Stellung der Temperatur-Mischklappe 5b/5c auf maximales Heizen abgesehen von gewissen Leckagen zumindest im Wesentlichen vollständig durch den Heizungswärmetauscher 4m. Der Heizungswärmetauscher 4m nimmt dabei das mit (4) und (90) gekennzeichnete Volumen des bisherigen Serienheizungswärmetauschers (4) und des Serien-PTC (90) ein. Die zugehörige Einbausituation der entsprechenden bisherigen Serien-Anwendung ist in Fig. 2 gezeigt mit dem Heizungswärmetauscher 4 und dem elektrischen PTC-Zuheizer 90. Bei Einstellung auf maximale Heizleistung wird in der Regel der größte Anteil der in die Fahrgastzelle eingebrachten Luft über die Fußraumausströmer 5ff geleitet. Je nach Fahrzeugklasse und Anspruch an den Klimakomfort haben manche Fahrzeuge lediglich Fußraumausströmer im Bereich der Vordersitze, oder bei höherem Komfortanspruch auch an den Hintersitzen.

Neben dem Austritt über die Fußraumausströmer ist über Regelklappen, z.B. 5fd für die Frontscheiben und/oder 5fm als sogenannte Mannanströmer eine bedarfsgerechte Luftverteilung einstellbar. Außerdem wird im Allgemeinen stets ein Teil der Kabinenluft an die Scheiben geführt, um ein Beschlagen derselben zu vermeiden. In der Heizungsteillast übernimmt die Temperaturmischklappe 5b/5c die Drosselung der Heizung, gegebenenfalls in Abstimmung mit einem Absenken der Gebläseleistung. Ein Anschlag 5e für die Mischklappe 5b wird hierbei durch eine Blende 5e bereitgestellt, wobei 5a die in den Wärmetauscher einströmende Kaltluft, 5f die temperierte Kabinenzuluft (Mischtemperatur aus Strömungspfad 5b und 5c), 5d den Heizluftpfad (unvermischte Luft aus dem Wärmetauscher und 5g eine Temperaturregelklappe anzeigen.

Wesentlich an der Vorgehensweise ist, dass wie in Fig. 1 gezeigt, ein wesentlich leistungsfähigerer und auch großvolumigerer Heizungswärmetauscher 4m zum Einsatz kommt als bisher üblich und insbesondere, dass in Strömungsrichtung hinter dem Heizungswärmetauscher kein Bauraum für einen PTC-Zuheizer mehr verfügbar ist oder vorgehalten wird.

Das Wärmetauscherbauvolumen kann so um zumindest das Bauvolumen des PTC-Zuheizers, gegebenenfalls einschließlich des Montagezwischenspaltes zwischen dem Heizungswärmetauscher und dem PTC-Zuheizer, erhöht werden. Das Heiz-Klimagerät des erfindungsgemäßen Personenkraftfahrzeugs ist mit einem gelöteten Hochleistungsheizungswärmetauscher, bevorzugt aus Aluminium, Kupfer oder Messing, ausgestattet ist, wobei der Heizungswärmetauscher aus mindestens einer Stufe, bevorzugt aber zwei oder mehr Stufen aufgebaut ist, bestehend aus

- einer gelöteten Wärmetauscher-Rippen-Rohr-Matrix in Kreuzstrombauweise (wie sie in PKWs typisch ist) mit
- Flachrohrwärmetauscherkanälen für das flüssige Kühlmittel und mit
- luftseitigen Strömungskanälen, gebildet aus den dem Kühlmittel abgewandten Oberflächen der kühlmittelseitigen Wärmetauscher-Kanäle und daran angelöteten luftseitigen Metallrippen welche mit
- einer Vielzahl turbulenzerzeugender Einschnitte ("Louvres") der luftseitigen Wärmeübertragungsrippen quer zur Luftströmung versehen sind.

Ein derartiger Hochleistungswärmetauscher weist bevorzugt einen (mittleren) Mittenabstand $t\_Rippe$ der parallel durchströmten luftseitigen Wärmeübertragungsrippen von weniger als 1,3 mm oder weniger als 1,15 - 1,0 mm auf und/oder der (mittlere) Mittenabstand $t\_Rohr$ der parallel durchströmten kühlmittelseitigen Strömungskanäle beträgt weniger als 7 mm. Des Weiteren ist es vorteilhaft, die kühlmittelseitigen Strömungskanäle als Flachrohrkanäle mit weniger als 1 mm Kanalhöhe auszubilden, wobei die Höhe kleinere Dimension des Kanalquerschnittes darstellen.

Ergeben sich aus den Randbedingungen bestehender Fertigungsanlagen Begrenzungen, die sehr dünnwandige kühlmittelseitige Strömungskanäle nicht zulassen, so kann mit gewissen Einschränkungen bezüglich des Gesamt-Heizpotentials auch eine Matrix mit einem (mittleren) Mittenabstand der luftseitigen Wärmeübertragungsrippen kleiner als 0,8 mm eingesetzt werden. Der (mittlere) Mittenabstand der parallel durchströmten kühlmittelseitigen Strömungskanäle beträgt hierbei vorzugsweise 9-11 mm. Die kühlmittelseitigen Strömungskanäle sind bei einem derartigen Heizungswärmetauscher dann vorzugsweise als Flachrohrkanäle mit 1-2 mm Kanalhöhe ausgebildet. Das Matrixvolumen kann hierbei mindestens 1,7 l oder bevorzugt sogar 2,0 l oder mehr betragen. Der größere Rohrmittenabstand und das größere Matrixvolumen sind hierbei hilfreich, um bei dieser Konfiguration die luftseitigen Druckverluste in Grenzen zu halten. Daneben kompensieren das größere Matrixvolumen $V\_Matrix$ und der besonders kleine Rippenabstand $t\_Rippe$ gewisse Defizite beim kühlmittelseitigen Wärmeübergang. Wärmetauscher mit Hochleistungswärmtauschermatrix sind prinzipiell bekannt wie beispielsweise im aktuellen 3er BMW (weitere Beispiele siehe Fig. 4). Neu ist jedoch der Einsatz der an sich bekannten Hochleistungswärmetauschermatrix mit einem weit über das bisher bekannte Maß erweiterten Bauvolumen und das, obwohl die Anwender bisher stets davon ausgehen, dass die Serienheizungswärmetauscher bereits weitgehend in der thermischen Sättigung betrieben werden und eine Vergrößerung daher keinen Sinn macht, aber wegen des benötigten PTC-Bauraums auch nicht machbar wäre. Die starke Vergrößerung des Bauvolumens erschließt sich also - wie bereits erwähnt - in der Praxis nur in der Kenntnis, dass es möglich ist, mit der Vorgehensweise den PTC-Zuheizer wirklich entfallen zu lassen. Überraschenderweise ist bei dem Heiz-Klimagerät somit ein PCT-Zuheizer entbehrlich. Dabei ist es eine weitere wichtige Option einer Weiterbildung der Erfindung, gegebenenfalls auch eine signifikante Erhöhung der luftseitigen Druckverluste am Heizungswärmetauscher in Kauf zu nehmen. Im einfachsten Fall wird die bereits hochkompakte Wärmetauschermatrix des Serienheizungswärmetauschers beibehalten und der Wärmetauscher in Luftströmungsrichtung um den Faktor 1,5-2,5 oder mehr tiefer ausgestaltet, d.h. das Matrixvolumen erhöht sich um den Faktor 1,5-2,5 oder mehr. Trotz des Entfalls des PTC-Zuheizers erhöht sich damit auch der luftseitige Druckverlust am Heizungswärmetauscher fast um diesen Faktor. Wie praktische Versuche aber zeigen, ist dies - im Gegensatz zu den auf den ersten Blick zu erwarteten Problemen mit dem Luftdurchsatz - durchaus in sehr vielen Fällen darstellbar. Bei Fahrzeugneuentwicklungen kann u.U. natürlich auch die Breite oder die Höhe der Matrix zur Matrixvolumenvergrößerung verwendet werden.

Die Erhöhung der Matrixbautiefe in Luftströmungsrichtung eröffnet in einem dritten Schritt auch ein weites Feld, um den kühlmittelseitigen Druckverlust bzw. den Kühlmitteldurchsatz des Heizungswärmetauschers an den jeweiligen Anwendungsfall optimal anzupassen. Dies ist je nach Motorenspektrum der jeweiligen Fahrzeugplattform ganz grundsätzlich von Interesse, ganz besonders aber für den Einbau von Maßnahmen zur Vergleichmäßigung der kühlmittelseitigen Wärmetauscherrohrdurchströmung über der Wärmetauscherbreite sowie für den Übergang zur ganz besonders effizienten Kreuzgegenstrombauweise mit zwei oder mehr Stufen.

Eine gut messbare Methode, um besonders effektive Ausgestaltungen des Heizgeräts mit Hochleistungsheizungswärmetauscher gegen den Stand der Technik abzugrenzen, stellt der sogenannte Q100-Wert dar, der die Leistungsabgabe des Heizungswärmetauschers bei Durchströmung mit 100 K Temperaturdifferenz zwischen Kühlmitteleintrittstemperatur und Lufteintrittstemperatur beschreibt. Gute PKW-Heizungswärmetauscher haben heute bei einem Luftmassenstrom von 6 kg/min und einem Kühlmittelmassenstrom von 10 l/min bei 50/50 Vol.% Wasser/Glycol einen Q100-Wert von ca. 8,0-9,0 kW. Betrachtet man die am Markt befindlichen PKW-Wärmetauscher mit den höchsten Leistungen pro Matrixvolumen bis hin zur gehobenen Mittelklasse - diese haben ein Wärmetauschermatrixvolumen von ca. 0,72-1,1 l - so ergeben sich in Verbindung mit den obigen Q100-Werten von 8,0-9,0 kW maximale volumenbezogene Leistungen heutiger Hochleistungs-PKW-Heizungswärmetauscher von etwa 11-12,5 kW/l Wärmetauschermatrix. Vor diesem Hintergrund bedeutet z.B. die Volumenvergrößerung der Wärmetauschermatrix von z.B. 1,0 l auf über 1,4 l, eine bewusste Absenkung der spezifischen Leistung auf Werte deutlich unter 7,1 kW/l (=10,0 kW / 1,4l), beispielsweise auf $\leq$ 6,7-6,85 kW/l, $\leq$ 6,5-6 kW/l oder auch $\leq$ 4,5-5 kW/l. Die spezifische Leistung kann dabei $\geq$ 2-2,5 kW/l oder $\geq$ 2,75-3 kW/l betragen, beispielsweise $\geq$ 3,5-3,75 kW/l oder $\geq$ 4 kW/l.

Eine besonders bevorzugte Reihenschaltung von zwei oder mehr Hochleistungs-Kreuzstromheizungswärmetauschern im Kreuzgegenstrom bedeutet in diesem Zusammenhang, dass Einzel-Kreuzstromwärmetauscher mit jeweils einer volumenbezogenen Einzel-Leistung von mehr als 8-9 kW/l oder mehr als 10-11 kW/l durch die Reihenschaltung - trotz des Kreuz-Gegenstrombetriebs - bewusst auf weniger als 7,1 kW/l herabgesetzt werden, wie oben ausgeführt. In der Praxis fällt die Herabsetzung der spezifischen Leistung sogar noch etwas stärker aus, u.a. da in manchen Anwendungen gewisse Kompromisse beim luftseitigen Rippenabstand gemacht werden müssen, um die luftseitigen Druckverluste des Heizungswärmetauschers in Grenzen zu halten.

Auch wenn die Vorgehensweise primär auf den kompletten Entfall des PTC-Zuheizers abzielt, so ist ganz grundsätzlich natürlich auch eine Vorgehensweise denkbar, die die Vergrößerung des spezifischen Matrixvolumens V_spec in Verbindung mit einem elektrischen PTC-Zuheizer vorsieht. Wichtig ist in diesem Zusammenhang natürlich das Vorhalten eines entsprechend großen Bauraums, wobei dies voraussichtlich nur in Ausnahmefällen wirklich in die Praxis umsetzbar sein dürfte. Die ursprüngliche Aufgabenstellung verschiebt sich dann dahingehend, den PTC-Betrieb auf möglichst wenig elektrische Leistung bzw. Einschaltdauer und somit möglichst wenig PTC-bedingten Kraftstoffmehrverbrauch zu begrenzen und/oder den PTC-Einbau auf Kaltländer zu begrenzen und/oder PTC-bedingte Zusatzkosten für größere Lichtmaschinen etc. einzusparen.

Den maximalen Nutzen bietet das Vorgehen jedoch erst, wenn der PTC völlig aus allen Anwendungen der Fahrzeugbaureihe verschwindet, so dass das Heiz-Klimagerät keinerlei Vorbereitungsmaßnahmen, insbesondere vorgehaltenes Bauvolumen oder Befestigungsvorrichtungen oder elektrische Anschlüsse, für eine luftseitige PTC-Zuheizung oder eine andere Zusatzheizvorrichtung, im Heiz-Klimagerät vorsehen muss.

Ganz besonders effizient ist ein Heizgerät, wenn der eingesetzte Wärmetauscher aus mindestens zwei, bevorzugt aber 3 oder 4, Kreuzstromwärmetauschern im Kreuzgegenstrom aufgebaut ist. Dabei ist es insbesondere vorteilhaft, wenn das Kühlmittel vor oder bei der Überleitung von einer Wärmetauscherstufe zur nächsten mit Querschnittsverengungen durchmischt und hierdurch auch etwas gedrosselt wird. Diese Maßnahme wirkt sich insbesondere positiv auf den Anlauf des Heizungswärmetauschers bei sehr kaltem Kühlmittel und ungleichmäßiger Luftbeaufschlagung aus, da auf diesem Wege jede einzelne Stufe homogenere Kühlmitteleintrittstemperaturen über die Wasserkastenbreite aufweist. Kühlmitteltemperaturinhomogenitäten verstärken sich durch diese Maßnahme im Kreuzgegenstrombetrieb weniger stark von Stufe zu Stufe, da ein Ausweichen der Kühlmittelströmung zu Kanälen mit höherer Kühlmitteltemperatur bzw. niedrigerer Kühlmittelviskosität weniger stark induziert wird. Die Drosselwirkung dieser Maßnahme ist in vielen Anwendungen ein erwünschter Nebeneffekt, da sie die Kühlmitteltemperaturspreizung am Heizungswärmetauscher und gegebenenfalls auch am Motor erhöht und somit - bei hinreichender Dimensionierung des Heizungswärmetauschers - die Heizung verbessert.

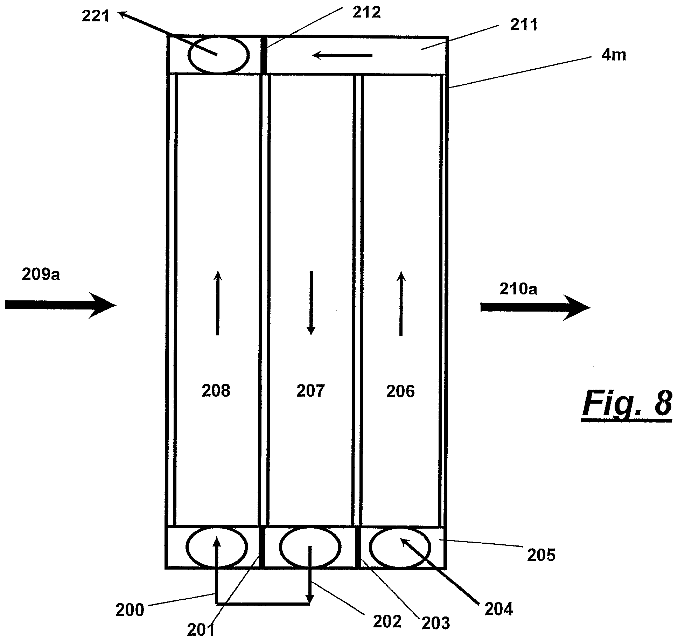

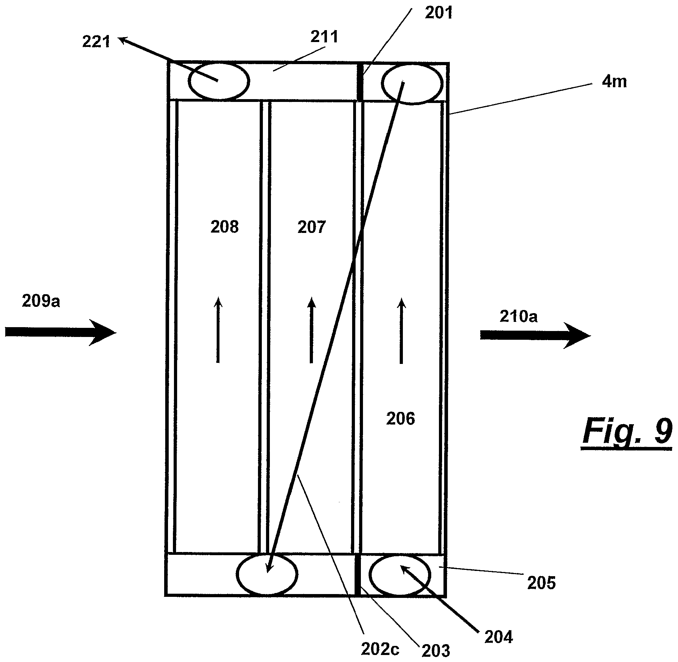

Ganz besonders effizient und einfach kann die Durchmischung dadurch erfolgen, dass das gesamte Kühlmittelvolumen eines ersten Wasserkastens über eine gemeinsame Bohrung oder eine gemeinsame Verbindungsleitung zum nachfolgenden Wasserkasten der nächsten Stufe geleitet wird. Fig. 8 zeigt einen entsprechend aufgebauten Heizungswärmetauscher im Kreuzgegenstrom. Die Kühlmittelzuströmung erfolgt hierbei über den Einlass 204, die erste Kreuzstromstufe wird durch die Flachrohrreihe 206 gebildet, mit einer ersten konventionellen Umlenkung im Wasserkasten 211 zur zweiten Kreuzstromstufe 207. Die Überleitung von der zweiten zur dritten Kreuzstromstufe 208 erfolgt über eine externe Verbindungsleitung 202/200 in welcher zwangsläufig eine Durchmischung und somit thermische Vergleichmäßigung des Kühlmittels vor der dritten Stufe erfolgt, was unabhängig von dem Ausführungsbeispiel allgemein vor der dritten oder vor der letzten Stufe erfolgen kann. Die Durchmischungsstelle kann gegebenenfalls auch in den Wasserkasten integriert werden, z.B. über eine oder mehrere Blenden oder Strömungsumlenkungen, was unabhängig von dem Ausführungsbeispiel allgemein gelten kann. Besonders vorteilhaft ist es, wenn die weitgehende Temperaturvergleichmäßigung des Kühlmittels vor der dritten Stufe oder allgemein vor der letzten Stufe erfolgt. Je nach Einbaulage und Entlüftungsbedarf sorgt gegebenenfalls eine zusätzliche Entlüftungsbohrung in zumindest einem, mehreren oder sämtlichen Wasserkastentrennblechen, beispielsweise in den Wasserkasten-Trennblechen 212 und/oder 203/201 für einen sicheren Betrieb. Die Pfeile 209a, 210a in den Figuren geben die Einströmrichtung und Ausströmrichtung der Kühlluft an. Eine ganz analoge Vorgehensweise zeigt Fig. 9, wobei in Fig. 9 die Leitung 202c die Aufgabe der Durchmischung übernimmt, indem sie das Kühlmittel der ersten Kreuzstromstufe 206 zu den beiden parallel liegenden Rohrreihen 207 und 208 der zweiten bzw. der der letzten Kreuzstromstufe fördert, was unabhängig von dem Ausführungsbeispiel allgemein gelten kann.

Der Einbau von Heizungswärmetauschern gemäß Fig. 8 oder Fig. 9 erfolgt bevorzugt liegend (d.h. mit in Einbaulage liegenden Wärmetauscherrohren), was unabhängig von dem Ausführungsbeispiel allgemein gelten kann, wobei der Kühlmittelzufluss 204 unten liegt. Unabhängig hiervon kann der Einbau allgemein mit stehenden Wärmetauscherrohren erfolgen (stehenden Wärmetauscherrohre 206, 207 und 208).

Dabei ist es ein ausgesprochener Vorteil der gezeigten Bauweise, dass es durch den liegenden oder alternativ stehenden Einbau möglich ist, die Wärmeübertragungsrohre des Heizungswärmetauschers parallel zur Fahrtrichtung des jeweiligen Fahrzeuges anzuordnen, da sich hierdurch eine gleichmäßigere Kühlmitteldurchströmung bei der besonders wichtigen Einstellung auf maximales Heizen in Fußraumstellung ergibt. In der bevorzugten Einbauposition liegt der Austrittswasserkasten bzw. der Kühlmittelauslass 221 bei stehenden Wärmeübertragungsrohren 206, 207, 208 bezogen auf die Einbaulage oben.

Etwas weniger Druckverlust als eine einzige Überströmleitung 202 liefert eine ähnliche Vorgehensweise, bei der die Durchmischung dadurch erfolgt, dass das Kühlmittelvolumen eines ersten Wasserkastens durch genau zwei Bohrungen oder genau zwei Verbindungsleitungen zum nachfolgenden Wasserkasten der nächsten Stufe geleitet wird und ein Trennblech im Wasserkasten die beiden Strömungspfade trennt.

Zur Einsparung an kühlmittelseitigem Druckverlust erfolgt in Fig. 8 die Durchmischung nur beim Übergang zur letzten und somit kühlmittelseitig kältesten Stufe, was unabhängig von dem Ausführungsbeispiel allgemein gelten kann. Da die letzte, d.h. die kälteste, Stufe am empfindlichsten auf Temperaturinhomogenitäten am Eintritt der einzelnen parallelen Kühlmittelkanäle reagiert, ist hier die Durchmischung besonders effektiv und kommt über die besonders homogenen Luftaustrittstemperaturen auch den luftseitig weiter stromab liegenden Stufen zugute.

Das hier vorgeschlagene Heizgerät liefert in fast allen Anwendungen eine verbesserte Heizleistung. Je nach Motor können gegebenenfalls jedoch auch zusätzliche kühlsystemseitige Maßnahmen genutzt werden, um in allen Betriebssituationen die gleiche Heizleistung wie beim heutigen PTC-Zuheizer zu erreichen. So ist es insbesondere besonders vorteilhaft, das Kühl- und Heizsystem so auszulegen, dass der Hauptkühlmittelstrom zur Kühlung einer Verbrennungskraftmaschine in einer ersten Betriebsart mit geringer ins Kühlmittel abgegebener Abwärme von weniger als 5 kW (gegebenenfalls auch weniger als 10kW oder weniger 20kW) primär durch den Heizungswärmetauscher strömt und in einer zweiten Betriebsart mit demgegenüber höheren Abwärme und/oder Kühlmitteltemperaturen von 10K (gegebenenfalls von 15K oder von 20K) oberhalb der frühesten im Fahrzeug einstellbaren oder thermostatisch voreingestellten Öffnungstemperatur des Fahrzeugkühlerzweigs auch durch einen Fahrzeugkühler und/oder einen Kühlerbypass strömt, und dass in der zweiten Betriebsart im leerlaufnahen Drehzahlbereich der Verbrennungskraftmaschine selbst bei hohem bis maximalem Kabinenheizbedarf weniger als 2,5-2.25 l/min Kühlmittel, beispielsweise weniger als 2,0-1,8 l/min, durch den Heizungswärmetauscher strömen. Die leerlaufnahe Drehzahl kann beispielsweise bis 10% oder bis 15-20% oder bis 25-50% oberhalb der Leerlaufdrehzahl von typischerweise 800 bis 1.000 Umdrehungen /Minute liegen. Die Abwärme in der zweiten Betriebsart kann ≥ 25-50% oder ≥ 100-150% oder ≥ 200% der Abwärme der ersten Betriebsart sein. Ein derart ausgelegtes Kühlsystem widerspricht zwar wieder den Auslegungsrichtlinien heutiger Fahrzeuge mit Verbrennungsmotor, da bei konventionellen Heizungswärmetauschern und weniger als 2-3 l/min Heizungskühlmitteldurchfluss die Wärmetauscherwirksamkeit einbricht und sich vielfach völlig undefiniert verhält. Beim Heiz-Klimagerät, ist dies jedoch angesichts der Leistungsreserven des Heizungswärmetauschers zulässig. Ein derart ausgelegtes System liefert in der zweiten Betriebsart genügend Heizleistung, da der Thermostat nur ab einer relativ hohen Temperatur öffnet. In der ersten Betriebsart zeigt sich speziell im Leerlauf eine erhöhte Temperaturspreizung, die es ermöglicht den Motor bzw. das Motoröl vorübergehend als zusätzliche Wärmequelle zu verwenden, um die Kühlmitteltemperatur am Motoraustritt etwas zu erhöhen sowie um die Oberflächenwärmeverluste in dieser besonders heizleistungskritischen Betriebssituation zu minimieren.

Die Ausgestaltung zielt insbesondere darauf ab, den Heizungswärmetauscher in einem weiten Betriebsbereich des Motors und in einem weiten Betriebsbereich der Kühlmitteldurchflüsse durch den Heizungswärmetauscher nahe am thermodynamisch maximal möglichen Wirkungsgrad zu betreiben, über die Eindämmung der Oberflächenwärmeverluste und Einsparung von Wärmeleistung für die Aufheizung der mit Kühlmittel und Motoröl in Kontakt kommenden Bauteile dennoch eine ausreichende Heizleistung bereitzustellen und über den Entfall der elektrischen Leistung für den PTC-Zuheizer Kraftstoff zu sparen. Zur Maximierung des Wärmenutzungsgrades am Heizungswärmetauscher und im Heizgerät ist es dabei besonders vorteilhaft, auch die heizgeräteseitigen Verluste zu minimieren, die dadurch entstehen, dass bei luftseitiger Temperaturregelung ein gewisser Anteil der Kabinenluft nicht durch die Wärmetauschermatrix strömt, sondern durch Leckagestellen der geschlossenen Temperaturregelklappen des Heizgeräts. Vor diesem Hintergrund ist es sehr hilfreich, insbesondere für den Fall, dass das Heiz-Klimagerät eine luftseitige Temperaturregelung aufweist, mittels hochwirksamer Dichtflächen an den einzelnen Regelklappen und/oder besonders hohen Anpresskräften durch deren Stellmotoren oder andere geeignete Ausgestaltung der Temperaturregelungseinrichtung sicherzustellen, dass bei voll geöffneter Heizung mehr als 95% der in die Kabine geförderten Luft die Heizungswärmetauschermatrix passiert. Eine Minimierung der Leckageluft stellt in diesem Zusammenhang sicher, dass die Vorteile des eingesetzten, Heizungswärmetauschers nicht unnötig limitiert werden.

Ein Fahrzeug mit einer hiernach vorgeschlagenen Ausgestaltung des Heiz-Klimageräts wird bei richtiger Ausgestaltung des Motorkühlkreislaufs in der Lage sein, die gleiche Heizleistung zu liefern wie heutige Fahrzeuge mit teuren und kraftstoffverbrauchsintensiven PTC-Zuheizern. Bei den typischen Randbedingungen eines winterlichen Heizungstests, z.B. gemäß VDA-Richtlinie, wird sich eine befriedigende Heizleistung einstellen, selbst wenn das Motorkühlmittel kälter bleibt als bei heutigem PTC-Betrieb. Eine besonders vorteilhafte Weiterbildung ist in vielen Anwendungsfällen daran zu erkennen, dass das Heiz-Klimagerät in einem Personenkraftfahrzeug mit Dieselmotor keinen PTC-Zuheizer oder sonstigen luftseitigen Zuheizer aufweist und bei einer typischen Wintertest-Konstantfahrt nach der VDA-Richtlinie, mit

- 50 km/h, in der von der Automatik-Schaltung automatisch eingestellten Fahrstufe oder bei manueller Gangschaltung im größten ruckelfrei fahrbaren Gang und bei
- -20°C Umgebungstemperatur und mit
- Heizungseinstellung auf maximales Heizen gemäß Fahrzeugbetriebsanleitung in den ersten 30 Minuten eine Kühlmitteltemperatur von 50°C am Heizungswärmetauschereintritt nicht überschreitet.

Darüber hinaus wird in vielen Fällen auch eine Abstimmung vorteilhaft sein, bei der in den ersten 30 Minuten eine Kühlmitteltemperatur von 40°C am Heizungswärmetauscheraustritt nicht überschritten wird, so dass sich über die thermische Spreizung am Heizungswärmetauscher zusätzliche Einsparungen an Wärme ergeben.

Die hohe Wärmeentnahme am Heizungswärmetauscher und die Abstimmung auf eine relativ hohe thermische Spreizung am Heizungswärmetauscher wird im Leerlauf insbesondere sogar dazu führen, dass z.B. die Kühlmitteltemperatur am Heizungswärmetauscheraustritt, im unmittelbaren Anschluss an die ersten 30 Minuten des Heizungstests bei -20°C und bei 50 km/h gemäß den obigen Ausführungen, nach weiteren 15 Minuten Leerlaufphase mit laufendem Motor und stehendem Fahrzeug auf Temperaturen unter 25°C abfällt und dennoch annähernd die gleiche Heizleistung liefert, wie heutige Fahrzeuge bei eingeschaltetem PTC.

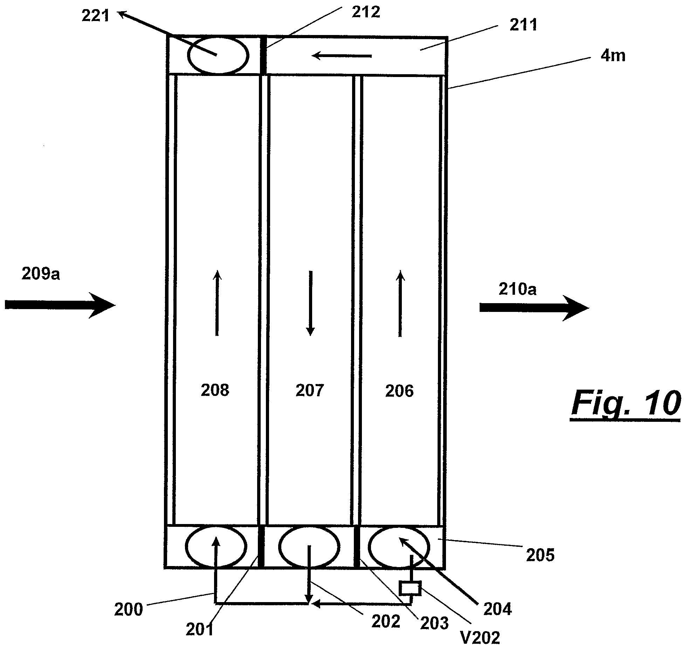

Die Vorgehensweise mit starker Vergrößerung des Wärmetauschervolumens ermöglicht es insbesondere, Heizungswärmetauscher mit mehreren im KreuzGegenstrom in Reihe geschalteten Kreuzstromwärmetauschern und trotzdem auch mit sehr geringen Kanalhöhen der Wärmetauscherflachrohre zu verwenden. Bei geringen Umgebungstemperaturen zeigt sich aufgrund der Reihenschaltung und der geringen Kanalhöhen z.T. eine gewisse Verzögerung im thermischen Anlauf, d.h. bis der gesamte Heizkreislaufkreislauf mit teilerwärmtem Kühlmittel befüllt ist. Um diesen thermischen Anlauf zu beschleunigen ist es besonders vorteilhaft, wenn ein Ventil, welches insbesondere ein ab einer bestimmten Druckdifferenz öffnendes Ventil ist, bei extrem niedrigen Kühlmitteltemperaturen eine, mehrere oder alle Kreuzstromwärmetauscherstufen temporär partiell oder komplett bypasst. Fig. 10 zeigt ein entsprechendes Ventil V202 an einem vorgeschlagenen Heizungswärmetauscher.

Besonders günstig ist es in diesem Zusammenhang, wenn das eingesetzte Heiz-Klimagerät derart konfiguriert ist oder betrieben wird, dass im Bypassbetrieb die dem kalten Lufteintritt zugewandte(n) Wärmetauscherstufe(n) mit warmem Kühlmittel beaufschlagt wird (werden) und somit das Kühlmittel in der (den) luftseitig nachfolgenden Stufe(n) über die Luft erwärmt wird, so dass diese Wärmetauscherstufe(n) über die erfolgende Abnahme der Kühlmittelviskosität nach und nach mehr durchströmt werden.

Es wurde bereits ausgeführt, dass es für die Vorgehensweise vielfach sehr vorteilhaft ist, sich von den bisherigen Vorgaben in den Lastenheften für Heiz-Klimageräte bezüglich des Kühlmitteldurchsatzes bzw. des Luftdurchsatzes zu lösen und größere Druckverluste am Heizungswärmetauscher zuzulassen. Dies betrifft sowohl die Luftseite als auch die Kühlmittelseite. Allgemein, speziell bei Motoren, die positiv auf eine große thermische Spreizung reagieren, ist es vielfach von Vorteil, bereits den Heizungswärmetauscher so auszulegen, dass er im Vergleich zum heutigen Standard für gelötete Heizungswärmetauscher nicht kühlmittelseitige Druckverluste in der Größenordnung von 7-25 mbar bei 5l/min und 80°C Kühlmitteldurchsatz erzeugt, sondern mehr als 40 mbar oder mehr als 45-50 mbar. Obwohl also die Erhöhung des Bauvolumens bzw. der Bautiefe grundsätzlich eine auf den ersten Blick als attraktiv erscheinende Absenkung des kühlmittelseitigen Druckverlusts prinzipiell begünstigt, ist es bei solchen Motoren vielfach besser, das Druckpotential in eine Verbesserung des kühlmittelseitigen Wärmeübergangs zu investieren. Dies kann u.a. über eine Reduktion der Kühlmittelkanalhöhe der Wärmetauscherrohre erfolgen oder über eine Erhöhung der Anzahl an Kreuz-

Gegenstromstufen oder lediglich über druckverlusterhöhende Maßnahmen, die für eine gleichmäßigere Kühlmitteldurchströmung der Wärmetauscherrohre sorgen.

Ebenso wie auf der Wasserseite zeigt die praktische Erprobung auch auf der Luftseite, dass eine luftseitige Druckverlusterhöhung am vorgeschlagenen Heizungswärmetauscher bis hin zum Faktor 2 im Vergleich zu heutigen Großserienbeispielen durchaus zu verkraften ist. Dies liegt insbesondere daran, dass der Heizungswärmetauscher nur einen vergleichsweise geringen Anteil am Gesamtdruckverlust auf der Luftseite ausmacht, zum anderen daran, dass ein geringfügiger Abfall des Luftmassenstroms den Wärmetauscher vielfach in einen etwas günstigeren Bereich des Wärmenutzungsgrades Phi verlagert und darüber hinaus auch die Wärmeverluste durch das Ausströmen teilerwärmter Kabinenluft aus dem Fahrzeuginnern etwas mindert. Vor diesem Hintergrund hat es sich nicht nur als machbar, sondern in vielen Fällen auch als besonders vorteilhaft erwiesen, auch bei hochkompakter Wärmetauschermatrix, d.h. insbesondere bei Rohr-Mittenabständen t_Rohr unter 6-7 mm oder unter 5 mm eine Bautiefe der Wärmetauschermatrix in Luftströmungsrichtung von mehr als 48-52 mm, insbesondere bis hin zu 56-60 mm und mehr, zu wählen und/oder einen isothermen luftseitigen Druckverlust am Heizungswärmetauscher von mehr als 200 Pa oder mehr als 225-250 Pa bei 6 kg/min Luft von 25°C zuzulassen. Im Vergleich speziell zu den hochkompakten Varianten an Großserienwärmetauschern gemäß Fig. 4 ist das sowohl eine ganz erhebliche Erhöhung der Bautiefe - die größte Matrixbautiefe in Luftströmungsrichtung bei den Varianten mit weniger als 7 mm Rohrmittenabstand beträgt dort 27 mm - als auch eine ganz erhebliche luftseitige Druckverlusterhöhung, doch hat sich dies beim Einbau von Prototypen des vorgeschlagenen Heizgeräts in heutige Großserien-PKW durchaus als vorteilhaft erwiesen.

Die Fertigung eines eingesetzten Heizungswärmetauschers gestaltet sich angesichts der obigen Ausführungen relativ einfach, da bereits großserienerprobte Werkzeuge und Halbzeuge für die Wärmetauscher-Flachrohre, die luftseitigen Rippen und auch für den Füge- bzw. Lötvorgang verwendet werden können. Für eine ganz besonders schnelle Serieneinführung ist jedoch eine Vorgehensweise besonders vorteilhaft, die bereits in Großserie gefertigte Heizungswärmetauscher verwendet. Der durch den Entfall des PTC gewonnene Bauraum ermöglicht es hier in manchen Fahrzeugen einfach zwei oder mehr im Kreuzgegenstrom in Reihe geschaltete Einzelwärmetauscher zu verwenden, die zumindest weitgehend baugleich miteinander sind, wobei gegebenenfalls auch bestehende Einzelheizungswärmetauscher verwendbar sind, wie sie bereits in Grosserie gefertigt werden. Im einfachsten Fall werden einfach zwei hochkompakte gelötete Heizungswärmetauscher über die Kühlmittelzu- und -ableitung oder über eine Anpassung des Wasserkastens in Reihe geschaltet. Die geringe Bautiefe in Luftströmungsrichtung einiger hochkompakter Heizungswärmetauscher lässt dies bei Entfall des PTC-Zuheizers auch bei heutigen Heizgeräten bereits mit rel. geringen Änderungen am Heizgerätegehäuse zu. Bei geeigneter Auswahl des Heizungswärmetauschers und gegebenenfalls mittels leichter Änderungen am Wasserkasten sind auf diesem Wege durchaus auch 3 und mehr Kreuzgegenstromstufen mit vertretbarem Aufwand realisierbar.

Diese Vorgehensweise ist grundsätzlich an Fahrzeugen mit und ohne Kühlerbypasszweig 6b verwendbar.

Das Heiz-Klimagerät kann hierbei einer Fahrzeugbaureihe mit mehr als 50.000 Fahrzeugen pro Jahr zugeordnet oder in dieser eingebaut sein, wobei in dieser Fahrzeugbaureihe alle Motoren einen Bypasszweig 6b und einen Motorkühlkreislauf mit einem Thermostaten aufweisen, der derart ausgelegt ist, dass der Bypasszweig (6b) bei Motorleistungen von ≥ 50% oder ≥ 75% der Nennleistung und geschlossenem Thermostaten zumindest temporär einen Kühlmitteldurchsatz aufweist, der größer als der Heizungskühlmitteldurchsatz ist.

Im Falle ohne Bypasszweig 6b ist zu beachten, dass bei geschlossenem Kühlerzweig 6a eine hinreichende Kühlmittelmenge durch den Motor strömt, zum einen um eine lokale Motorüberhitzung bei erhöhter Motorlast sicher zu vermeiden, zum anderen um eine saubere Regelung des Kühlerthermostaten während des Thermostatöffnungsvorgangs sicherzustellen. Vor diesem Hintergrund ist es ohne Bypasszweig 6b insbesondere vorteilhaft, den Heizungswärmetauscherzweig für einen höheren Durchfluss auszulegen und/ oder einen zum Heizungswärmetauscher parallelen und zumindest bei warmem Motor immer offenen Zweig vorzusehen. In der Regel wird man in diesem Fall bevorzugt den Heizungswärmetauscher mit noch etwas mehr Bauvolumen versehen und eine Auslegung in Richtung höheren Heizungskühlmitteldurchflusses vornehmen.

Weiterhin besteht das Bedürfnis, Heizungswärmetauscher und/oder Klimaheizgeräte bei kleinem bis mittlerem Kühlmitteldurchfluss weiter im Wirkungsgrad zu verbessern und damit den Auslegungsspielraum in Bezug auf die maximal mögliche Heizleistungssteigerung zu erweitern und/oder bei gleichem Heizungswärmetauscherwirkungsgrad und gleichem kühlmittelseitigem Druckverlust den luftseitigen Druckverlust und/oder den Heizungswärmetauscherbauraum zu verringern.

Hierzu wird eine Weiterbildung des Hochleistungsheizungswärmetauschers vorgeschlagen, der aufweist oder besteht aus

- genau vier im Kreuzgegenstrom in Reihe geschalteten Kreuzstromwärmetauschern und
- am ersten kühlmittelseitigen Rohrende der Wärmetauschermatrix einen Anschlusswasserkasten 301 mit Zuflussanschluss 311 und Abflussanschluss 312 für das Kühlmittel aufweist, der durch 2 Trennwände 350 und 352 zur Ausbildung der Kreuzgegenstromströmung aufgeteilt ist, und

- am anderen kühlmittelseitigen Rohrende der Wärmetauschermatrix einen Umlenkungswasserkasten 300 mit genau einer die Vierstufigkeit definierenden Trennwand 360

und wobei ferner alternativ oder in Kombination

(1) der Umlenkwasserkasten 300 eine kühlmittelseitige Bauhöhe hu aufweist, die weniger als 30% der kühlmittelseitigen Bauhöhe ho des Anschlusswasserkastens 301 beträgt
und/oder
(2) eine zusätzliche mittlere Trennwand 351 des Anschlusswasserkastens 301 mit einem blendenartigen Strömungsübertritt 313 zwischen Stufe 2 und 3, in welchem das in den ersten beiden Stufen abgekühlte Kühlmittel gedrosselt und gleichzeitig weitgehend homogenisiert wird, vorgesehen ist.

Die damit realisierbare weitere Verbesserung der Heizleistung führt vielfach auf Fahrzeug-Heizleistungswerte besser als mit heutigen PTC-Zuheizern. In vielen Fällen ist das aber gar nicht nötig, so dass man dann das neue Heizungswärmetauscherdesign zur weiteren Senkung der luftseitigen Druckverluste oder zur weiteren Reduktion des Bauraums verwenden kann.

Ferner sind diese weiteren Verbesserungen mit minimalem Kostenaufwand realisierbar. Durch die mit dem vorgeschlagenen Design einhergehende Erhöhung der kühlmittelseitigen Druckverluste ist ein gewisser Abfall des Kühlmitteldurchflusses im Heizungszweig verbunden, der durchaus signifikant zur weiteren Verbesserung des Gesamtsystems d.h. der effektiven Fahrzeugheizleistung beiträgt.

Der Umlenkwasserkasten kann hierbei eine solche kühlmittelseitige Bauhöhe hu aufweisen, dass zwischen dem Kühlmittelflachrohr-Austritt und -Eintritt und der gegenüberliegenden Umlenkwasserkasten-Innenwandseite für jedes Einzelflachrohr genau der gleiche Abstand besteht, wobei für alle Flachrohrendpositionen entlang des Flachrohrumfangs im Mittel weniger als 1-3 mm Abstand zur Umlenkwasserkasten-Innenwand bestehen.

Ferner kann der Überströmquerschnitt eine Strömungsquerschnittsfläche aufweisen, die gleich oder kleiner als die kleinste Strömungsquerschnittsfläche des Zuflussanschlusses ist.

Das Heiz-Klimagerät kann mit einem in den Hauptabmessungen mit diesem zumindest im Wesentlichen baugleichen Heizungswärmetauscher verbaut sein. Die Hauptabmessungen sind Länge, Breite und Höhe von Gerät und Wärmetauscher.

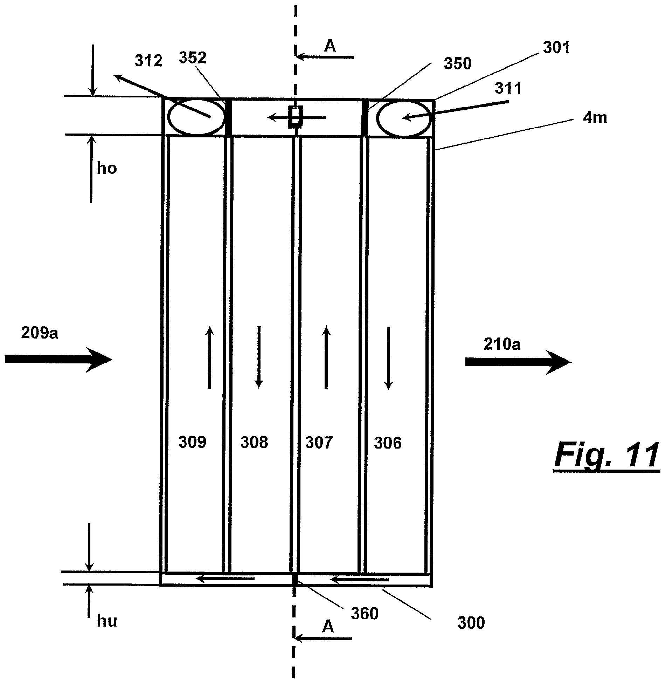

Diese Weiterbildung ist in den Figuren 11-15 beispielhaft dargestellt. Durch die Bezugsziffern 306-309 werden die Tauscherrohre angezeigt. Allgemein haben gleiche Bezugsziffern dieselbe Bedeutung, insbesondere in den Figuren 8-15.

Die 4-stufigen Kreuzgegenstromheizungswärmetauscher haben im Vergleich zum 3-Stufen-Kreuzgegenstromheizungswärmetauscher neben dem besonders hohen Wirkungsgrad auch fertigungstechnische Vorteile. So kann der Umlenkwasserkasten 300 einfacher und mit weniger Toleranzanforderungen gefertigt werden. Besonders wichtig ist dabei die Möglichkeit, den Umlenkwasserkasten kleiner zu machen und die Bauhöhe hu auf sehr kleine Werte abzusenken, d.h. kleiner als 30% des entsprechenden Maßes ho des oberen Anschlusswasserkastens 301, beispielsweise kleiner 25% oder kleiner 20% desselben, besonders bevorzugt mit weniger als 1 mm lichter Weite zur gegenüberliegenden Wasserkastenwand. Die Bauhöhe bezieht sich hierbei auf den Bereich des Wasserkastens im Trennbereich der 1-ten zur 2-ten Stufe und/oder der 3-ten zur 4-ten Stufe oder auf die Bauhöhe des Wasserkastens insgesamt, d.h. vorzugsweise auf die Bauhöhe über dessen gesamte Erstreckung in Kühlmittelströmungsrichtung. Hierdurch kann zudem zusätzlicher Bauraum für die Maximierung des Wärmetauschermatrixvolumens bereitgestellt werden. Der Anschlusswasserkasten umfasst hierbei allgemein die Anschlüsse für Zu- und Ableitung.

Der geringe Abstand zwischen dem Kühlmittelflachrohraustritt und der gegenüberliegenden Umlenkwasserkasten-Innenwand beträgt bevorzugt weniger als 1 mm Abstand. Der geringe Abstand von weniger als 1 mm ist hierbei in Verbindung mit der 4-Stufigkeit und der einfachen Ausgestaltung des Umlenkwasserkastens 300 mit besonders geringem fertigungs- und toleranzspezifischen Problemen verbunden, da die für die Strömungsgleichverteilung notwendige Einhaltung eines gleichen Wandabstands nur am Umlenkwasserkasten 300 erforderlich ist und am Wasserkasten 301 hingegen selbst gröbere Toleranzen, z.B. bei etwas unterschiedlicher Matrix-Flachrohrlänge, zulässig sind.

Im Gegensatz zu bereits in Kfz-Serie befindlichen 2-stufigen Heizungswärmetauschern ist diese Maßnahme dann trotz der damit verbundenen kühlmittelseitigen Druckverlustzunahme im Vergleich zu Wasserkästen konventioneller Größe zielführend, wenn die Auslegung des Gesamtsystems - z.B. gemäß der oben beschriebenen Vorgehensweise - ir Richtung kleinerer Kühlmitteldurchsätze im Heizungszweig erfolgt, d.h. wenn der Heizungswärmetauscher selbst als Drosselorgan eingesetzt wird. Die geringe Höhe ho wirkt dabei, ebenso wie die Vierfach-Kreuzgegenstrombauweise und/oder die Überströmstelle als internes Drosselorgan im Heizungswärmetauscher und bewirkt gleichzeitig eine Verbesserung der kühlmittelseitigen Strömungsgleichverteilung und somit des Wärmetauscherwirkungsgrades. Ebenso wichtig wie dieser Effekt ist dabei die Tatsache, dass die geringe Höhe hu bei gleichen Heizungswärmetauscheraußenabmessungen gleichbedeutend ist mit einer Erhöhung der Matrixstirnfläche und auch des Matrix-Volumens.

Beides lässt sich direkt umsetzen in einen geringeren luftseitigen Druckverlust und/oder einen besseren Wirkungsgrad.

Im Vergleich zu typischen Heizungswärmetauschern in der heutigen Pkw-Großserie mit konventioneller Gestaltung des oberen und unteren Wasserkastens besteht der erste maßgebliche Unterschied dieser Weiterbildung darin, dass nicht ein oder zwei Stufen verwendet werden, sondern vier Stufen. Die serienuntypische Systemauslegung auf geringere Zielwerte des Heizungskühlmitteldurchflusses einerseits aber gegebenenfalls auch die Ausnutzung des PTC-Bauraums andererseits erlauben diesen Übergang auf vier Stufen, ohne dass im Warmlauf bei geringer Motordrehzahl der Kühlmitteldurchsatz bzw. der Wärmetauscherwirkungsgrad auf unzulässige Werte einbrechen.

Neben der Drosselung durch die Vierstufigkeit ist als zweite zusätzliche Drosselstelle der Umlenkwasserkasten 300 so ausgestaltet, dass die Bauhöhe hu des Umlenkwasserkastens 300 weniger als 30% zur gegenüberliegenden Wasserkastenwand, wie oben ausgeführt. Die geringe Entfernung zum Strömungsaus- und -eintritt der Flachrohre relativ zur gegenüberliegenden Wasserkastenwand bewirkt eine signifikante Zunahme der lokalen Drosselverluste. Im Gegenzug bewirken aber diese lokalen Drosselverluste, dass die Durchströmung der einzelnen Flachrohre der Wärmetauschermatrix besonders gleichmäßig erfolgt. Die Folge hiervon ist, dass selbst bei relativ geringem Kühlmitteldurchsatz durch die Flachrohre der Matrix immer noch eine sehr gute Strömungs- und Temperaturgleichverteilung vorliegt.

Konventionelle Serienwärmetauscher auf hohe Kühlmitteldurchsätze und somit möglichst geringe Druckverluste ausgelegt. Daher sind bei allen bekannten Kfz-Großserienwärmetauschern die Abmessungen von hu wesentlich größer, um die Druckverluste bei der Kühlmittelströmungsumlenkung im Umlenkwasserkasten 300 zu minimieren. In der Regel sind dort die Abmessungen hu und ho in etwa gleich. Überraschenderweise ist die prinzipbedingte Druckverlustzunahme nach der Weiterbildung zu einem vierstufigen Heizungswärmetauscher einschließlich der Druckverlustzunahme aufgrund des extrem kleinen Umlenkwasserkastens in der Regel jedoch kein Nachteil, sondern eher ein Vorteil. Wichtig ist hierbei, dass der Bauraum des PTC für den Wärmtauscher zur Verfügung steht, und das Gesamtsystem in der Lage ist, den PTC-Zuheizer leistungsmäßig zu ersetzen.

Letztlich erschließen sich auf diesem Wege erhebliche Fahrzeugherstellungskosten- und Kraftstoffeinsparungen.

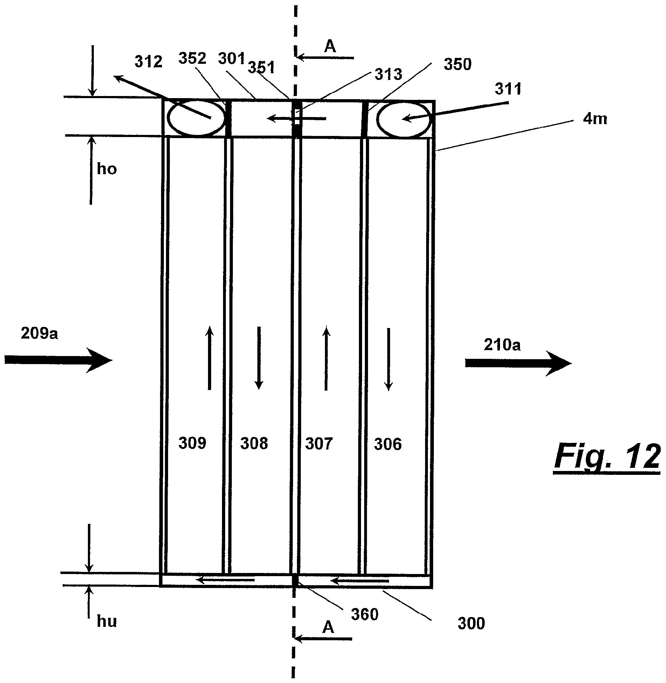

Ganz besonders vorteilhaft ist es, speziell in Anwendungen, die besonders kleine Kühlmitteldurchsätze benötigen, wenn beispielsweise gemäß Fig.12 die Drosselung des Heizungswärmetauscherkühlmittedurchsatzes auf den anwendungsspezifischen Ziel-Kühlmitteldurchsatz durch eine Blende oder ein Überleitungsrohr 313 zwischen Stufe 2 und 3 erfolgt. Hierdurch kann gegebenenfalls eine Drosselung in einem weiteren Schritt erfolgen. Dabei ist es insbesondere vorteilhaft, dass das Kühlmittel vor oder bei der Überleitung von der zweiten zur dritten Wärmetauscherstufe in dieser Querschnittsverengung nicht nur etwas gedrosselt wird, sondern zwangsläufig auch sehr gut durchmischt.

Diese Maßnahme zur Drosselung und Durchmischung zwischen Stufe 2 und 3 wirkt sich insbesondere positiv auf den Anlauf des Heizungswärmetauschers bei sehr kaltem Kühlmittel und ungleichmäßiger Luftbeaufschlagung aus, da auf diesem Wege jede einzelne Stufe homogenere Kühlmitteleintrittstemperaturen über die Wasserkastenbreite aufweist. Kühlmitteltemperaturinhomogenitäten verstärken sich durch diese Maßnahme im Kreuzgegenstrombetrieb weniger stark von Stufe zu Stufe, da ein Ausweichen der Kühlmittelströmung zu Kanälen mit höherer Kühlmitteltemperatur bzw. niedrigerer Kühlmittelviskosität weniger stark induziert wird. Dabei wird die Strömungsvergleichmäßigung gegebenenfalls auch durch die Erhöhung des Druckverlustes beim Aus- und Einströmen im Umlenkwasserkasten 300 mit verkleinerter Bauhöhe hu unterstützt. Die anwendungsspezifische Druckverlustanpassung kann letztlich wahlweise über den Wert hu erfolgen oder - in vielen Fällen etwas einfacher handhabbar - durch den Überströmquerschnitt 313 oder durch beide Maßnahmen in Kombination.

Die kühlmittelseitige Drosselwirkung dieser Maßnahmen ist in vielen Anwendungen deshalb ein erwünschter Nebeneffekt, da sie die Kühlmitteltemperaturspreizung am Heizungswärmetauscher und gegebenenfalls auch am Motor erhöht und somit - bei hinreichender Dimensionierung des Heizungswärmetauschers - die Heizung verbessert.

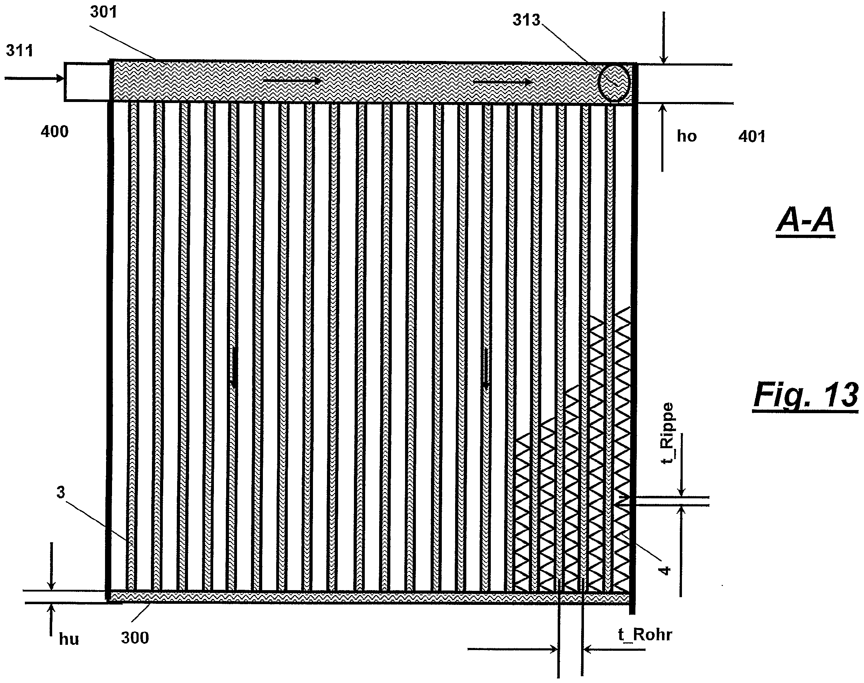

Wie in Fig. 12 und Fig. 13 gezeigt, ist es speziell bei relativ kleinen Zielwerten des Heizungskühlmitteldurchsatzes besonders vorteilhaft, wenn die Überströmung von Stufe 2 nach Stufe 3 nicht - wie heute in Kfz-Heizungswärmetauschern zur Druckverlustminimierung üblich - über die gesamte Wasserkastenbreite erfolgt, sondern wenn zur Durchmischung der gesamte Kühlmittelvolumenstrom über eine gemeinsame Bohrung oder eine gemeinsame Verbindungsleitung zum Wasserkasten der dritten Stufe geleitet wird. Die Kühlmittelzuströmung erfolgt hierbei über den Einlass bzw. Zuflussanschluss 311, die erste Kreuzstromstufe wird durch die Flachrohrreihe 306 gebildet, mit einer ersten Umlenkung im Wasserkasten 300 zur zweiten Kreuzstromstufe 307. Die Überleitung von der zweiten zur dritten Kreuzstromstufe 308 erfolgt über die Verbindungsöffnung 313, in welcher zwangsläufig eine Durchmischung und somit thermische Vergleichmäßigung des Kühlmittels vor der dritten Stufe erfolgt. Die Durchmischungsstelle 313 ist bevorzugt in den Wasserkasten 301 integriert. Wichtig ist dabei, dass eine weitgehende Temperaturvergleichmäßigung des Kühlmittels vor der dritten Stufe erfolgt. Je nach Einbaulage und Entlüftungsbedarf sorgt gegebenenfalls eine kleine zusätzliche Entlüftungsbohrung im Wasserkasten-Trennblech 360 oder 350/352 (bzw. allgemein einer entsprechenden Trennwand) für einen sicheren Betrieb.

Der gleichzeitige Übergang zu 4-Kreuzgegenstromstufen anstelle heute maximal 2 Stufen in der Pkw-Großserie und der Einbau zusätzlicher Drosselstellen zur Homogenisierung der Wärmetauscherdurchströmung und Temperaturverteilung sind weitere bevorzugte Verbesserungsschritte des Wärmetauschers. Wie entsprechende Fahrzeugversuche zeigen, lässt sich die damit im allgemeinen einhergehende Zunahme des Druckverlustes im Heizungszweig mit bekannten Motorkühlmittelpumpenkennlinien handhaben. Dies ist insbesondere deshalb der Fall, weil sich in vielen Anwendungen eine Absenkung des Kühlmitteldurchflusses im Heizungszweig mit derartigen Hochleistungsheizungswärmetauschern vorteilhaft auf die Heizleistung auswirkt.

Neben der 4-Stufigkeit ist der Wärmetauscher dadurch gekennzeichnet, dass er interne Konstruktionsmerkmale aufweist, die einerseits den kühlmittelseitigen Druckverlust prinzipbedingt erhöhen und damit den Kühlmitteldurchsatz im Fahrzeugheizungskreis absenken und - bevorzugt zusätzlich mittels der Durchmischung zwischen Stufe 2 und 3 - für einen reduzierten Wirkungsgradabfall bei kleinen bis mittleren Kühlmitteldurchsätzen sorgen. Ein solches Konstruktionsmerkmal stellt der Überströmkanal 313 dar. Am einfachsten wird dieser durch eine Blendenbohrung 313a im Trennblech 351 dargestellt. Die mittlere Trennwand 351 des Anschlusswasserkastens 301 weist dabei bevorzugt einen blendenartigen Strömungsübertritt 313 zwischen Stufe 2 und 3 auf, in welchem das in den ersten beiden Stufen abgekühlte Kühlmittel gedrosselt und gleichzeitig weitgehend homogenisiert wird. Der Umlenkwasserkasten 300 am anderen kühlmittelseitigen Rohrende der Wärmetauschermatrix weist genau eine die Vierstufigkeit definierende Trennwand 360 auf, d.h. dort findet lediglich eine Strömungsumlenkung statt. Die Quervermischung ist dabei vergleichsweise relativ gering, ganz im Gegenteil zur Vermischung zwischen Stufe 2 und 3 im Wasserkasten 301. Es versteht sich, dass allgemein der Trennwand im Wesentlichen die Funktion eines Trennelementes zukommt, die Trennwand muss somit keine konstruktiv tragende Funktion haben, auch wenn dies der Fall sein kann.

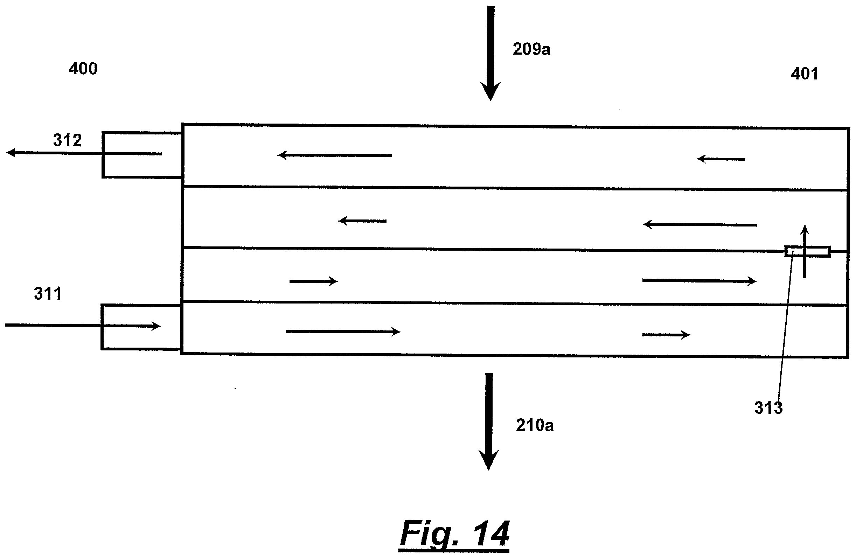

Dabei ist es besonders vorteilhaft, wenn wie in Fig.12 und Fig. 13 exemplarisch gezeigt, der Zuflussanschluss 311 und der Abflussanschluss 312 auf der gleichen Seite 400 des Anschlusswasserkastens 301 liegen und der Strömungsübertritt 313 der Trennwand 351 auf der gegenüberliegenden Seite 401 des Anschlusswasserkastens 301, insbesondere nahe dem am weitesten von den Zu- und Abflussanschlüssen 311/312 entfernten Flachrohr der Wärmetauschermatrix. Diese Anordnung führt auf eine besonders gute Strömungsgleichverteilung auf die einzelnen Wärmetauscher-Flachrohre. Dies liegt u.a. daran, dass sich der dynamische Druck im Wasserkasten 301 aufgrund der Querströmung relativ zu den Wärmetauschermatrix-Flachrohren in Summe über alle vier Stufen weitgehend kompensiert. Symbolisch ist dies in Figur 14 durch die Länge der Strömungspfeile im Wasserkasten 301 angedeutet: Im Mittel über alle vier Stufen finden sich gleich viele lange und kurze Pfeile, d.h. Matrix-Flachrohreintritts- bzw. Austrittstellen mit erhöhtem bzw. reduziertem dynamischem und damit auch gegenläufig variierendem statischem Druck.

Gemäß Fig. 11 und Fig. 12 ist ein Heizungswärmetauscher besonders einfach zu fertigen, wenn der Umlenkwasserkasten 300 genau eine Trennwand 360 aufweist.

Um eine gute Durchmischung zwischen Stufe 2 und 3 zu erhalten ist es besonders vorteilhaft, wenn der Überströmquerschnitt 313 eine Strömungsquerschnittsfläche aufweist, die gleich oder kleiner als die Strömungsquerschnittsfläche des Zuflussanschlusses 311 ist. Damit ist zusätzlich sichergestellt, dass der Wärmetauscher auch eine Mindestdrosselung des Kühlmitteldurchsatzes bewirkt, die bei kaltem wie bei warmem Kühlmittel präsent ist, d.h. der Heizungswärmetauscherdurchfluss variiert weniger in Abhängigkeit von der Kühlmitteltemperatur als Heizungswärmetauscher ohne die interne Drosselung mittels des Überströmquerschnitts 313 und gegebenenfalls der kleinen Bauhöhe hu des Umlenkwasserkastens.

Bei Beachtung der bekannten Richtlinien für die Wärmetauscherentlüftung kann der eingesetzte Heizungswärmetauscher in den verschiedensten Einbaulagen verbaut werden, beispielsweise stehend oder liegend, gegebenenfalls mit zusätzlichen Entlüftungsbohrungen im mm-Bereich, z.B. im Bereich von 1-2mm oder 2-3 mm.

Ganz besonders vorteilhaft ist dabei eine Anordnung, bei dem der Wärmetauscher beim Ein- und Ausbau parallel zu den Wärmetauscherflachrohren verschoben wird. In diesem Fall aber gegebenenfalls auch unabhängig hiervon ist ein solcher Wärmetauscher besonders bauraumeffizient, wenn der Anschlusswasserkasten 301 im eingebauten Zustand den Einbauschacht für den Ein- und Ausbau des Heizungswärmetauschers verschließt, insbesondere wenn er dabei zumindest teilweise aus dem Heizklimagerät herausragt. Der Umlenkwasserkasten 300 und die beiden Heizungswärmetauscherseitenflächen können dabei an den strömungsbestimmenden Innenwänden des Heizklimagerätes anliegen und/oder sind dort - gegen Leckageluft an der Wärmetauschermatrix vorbei - abgedichtet. Neben den Vorteilen beim Ein- und Ausbau und bei der Abdichtung ist bei dieser Anordnung eine ganz besonders geringe Versperrung der Luftströmung vorhanden, d.h. der luftseitige Druckverlust ist durch die geringe Bauhöhe hu des Umlenkwasserkastens 300 und die weitgehend außerhalb des eigentlichen Luftströmungspfades befindliche Anordnung des Anschlusswasserkasten 301 besonders gering. Damit wird die effektive Wärmetauschermatrixgröße bei vielen fahrzeugtypischen Anwendungen maximal.

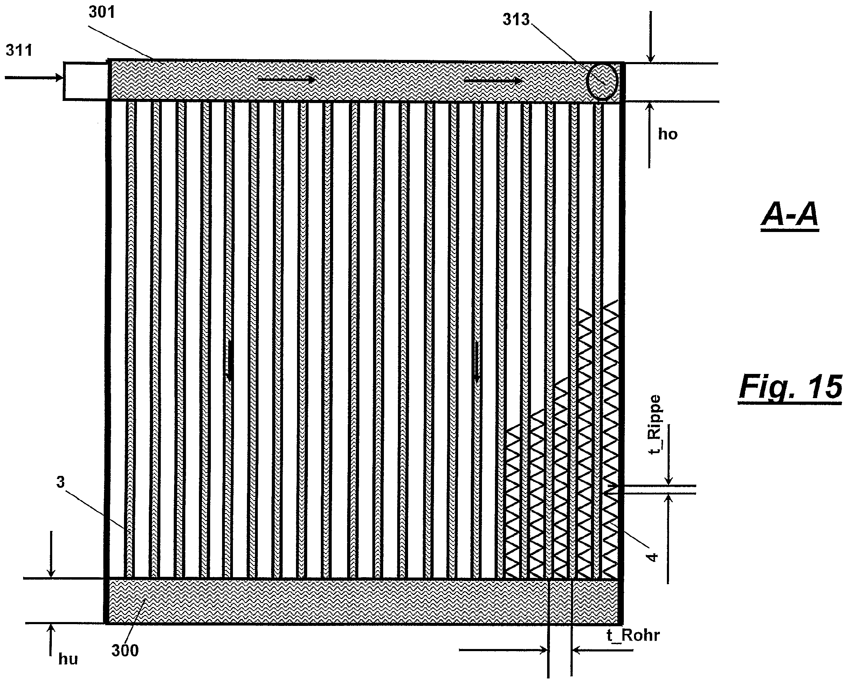

Die geringe Bauhöhe hu ist dabei nicht zwingend notwendig aber sehr hilfreich, um einen im Hinblick auf geringe bis mittlere Kühlmitteldurchflüsse besonders effizienten Heizungswärmetauscher zu realisieren. Vor diesem Hintergrund bedeutet auch der 4-stufige Wärmetauscher gemäß Fig. 15 eine signifikante Verbesserung im Vergleich zu bisher bekannten Heizungswärmetauschern in Grosserien-Pkw.

Figur 15 zeigt hierbei im Querschnitt eine Abwandlung eines Wärmetauschers entsprechend Figur 13, wobei die mittlere Trennwand 351 auch hier einen blendenartigen Strömungsübertritt 313 zwischen Stufe 2 und 3 aufweist, wobei jedoch im Unterschied zu Figur 13 der obere und der untere Wasserkasten 300, 301 im Wesentlichen dieselbe Bauhöhe aufweisen.

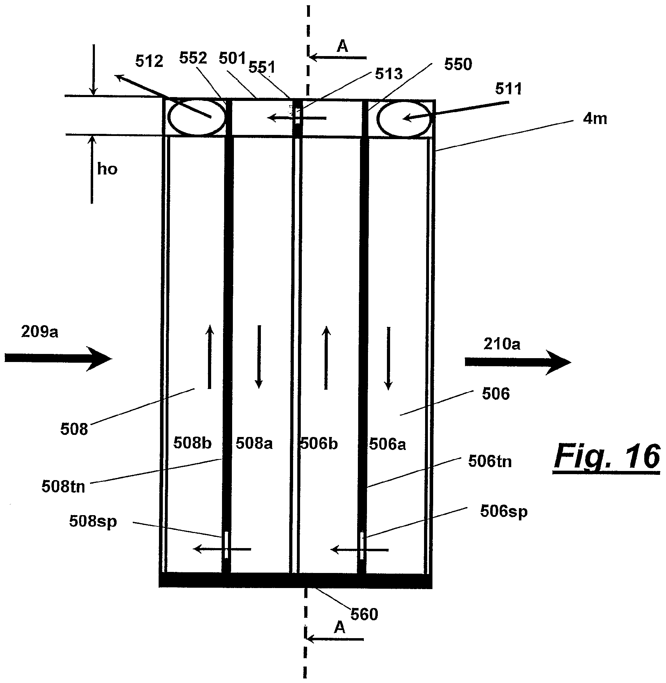

Eine Abwandlung eines Wärmetauschers nach den Figuren 11-15 ist in den Figuren 16-18 beispielhaft dargestellt, wobei in den Figuren gleiche Bezugsziffern (gegebenenfalls um 200 erhöht) jeweils dieselbe Bedeutung haben. Sofern sich aus dem Nachfolgenden nicht anderes ergibt, sei auf die obigen Ausführungen verwiesen, insbesondere auf das Ausführungsbeispiel zu den Figuren 11-15. Diese Weiterbildung ist insbesondere im Zusammenhang mit der vorliegenden Erfindung und Anspruch 1 derselben vorteilhaft, aber auch unabhängig von dieser. Diese Weiterbildung, sofern sie unabhängig von dem Personenkraftfahrzeug nach Anspruch 1 ist, fällt nicht unter den Schutzbereich der Ansprüche.

Durch das nachfolgende Ausführungsbeispiel wird die Aufgabe gelöst, ein Kfz mit Heizungswärmetauscher bereitzustellen, der bei kleinem bis mittlerem Kühlmitteldurchfluss einen verbesserten Wirkungsgrad aufweist und damit den Auslegungsspielraum in Bezug auf die maximal mögliche Heizleistungssteigerung erweitert und/oder bei gleichem Heizungswärmetauscherwirkungsgrad und gleichem kühlmittelseitigem Druckverlust wie herkömmliche Wärmetauscher den luftseitigen Druckverlust und/oder den Heizungswärmetauscherbauraum verringert, wobei insbesondere die prinzipbedingten Fertigungsvorteile hervorzuheben sind. Dies betrifft insbesondere den Verzicht auf den unteren Wasserkasten und das Potential, die Vorgehensweise auch bei Plattenwärmetauscherbauweise erfolgreich einzusetzen. Insbesondere bei sehr großer Stückzahl können hierdurch die Kosten weiter gesenkt werden. Darüber hinaus wird eine weitere Vergrößerung des effektiven Matrixvolumens und/oder eine Absenkung des luftseitigen Druckverlustes ermöglicht.

Der Zuflussanschluss 511 und der Abflussanschluss 512 können auf der gleichen Seite 600 des Anschlusswasserkastens 501 liegen und der Strömungsübertritt 513 der Trennebene 551 auf der gegenüberliegenden Seite 601 des Anschlusswasserkastens 501, insbesondere nahe dem am weitesten von den Zu- und Abflussanschlüssen 511/512 entfernten Flachrohr der Wärmetauschermatrix.

Auch diese Weiterbildung liefert wieder zwangsläufig etwas mehr kühlmittelseitigen Druckverlust als ein konventioneller vierstufiger Heizungswärmetauscher mit konventioneller Wasserkastenumlenkung über die ganze Matrixbreite, d.h. ohne die Drossel- und Durchmischungsstelle 513.

Ganz besonders vorteilhaft ist es, dass die Drosselung des Heizungswärmetauscherkühlmitteldurchsatzes auf den anwendungsspezifischen Ziel-Kühlmitteldurchsatz durch eine Blende oder ein Überleitungsrohr 513 zwischen Stufe 2 und 3 erfolgt. Dadurch ergibt sich der Vorteil, dass das Kühlmittel vor oder bei der Überleitung von der zweiten zur dritten Wärmetauscherstufe in dieser Querschnittsverengung nicht nur etwas gedrosselt wird, sondern zwangsläufig auch sehr gut durchmischt. Diese Maßnahme zur Drosselung und Durchmischung zwischen Stufe 2 und 3 wirkt sich wie auch in der vorhergehenden Weiterbildung insbesondere positiv auf den Anlauf des Heizungswärmetauschers bei sehr kaltem Kühlmittel und ungleichmäßiger Luftbeaufschlagung aus.

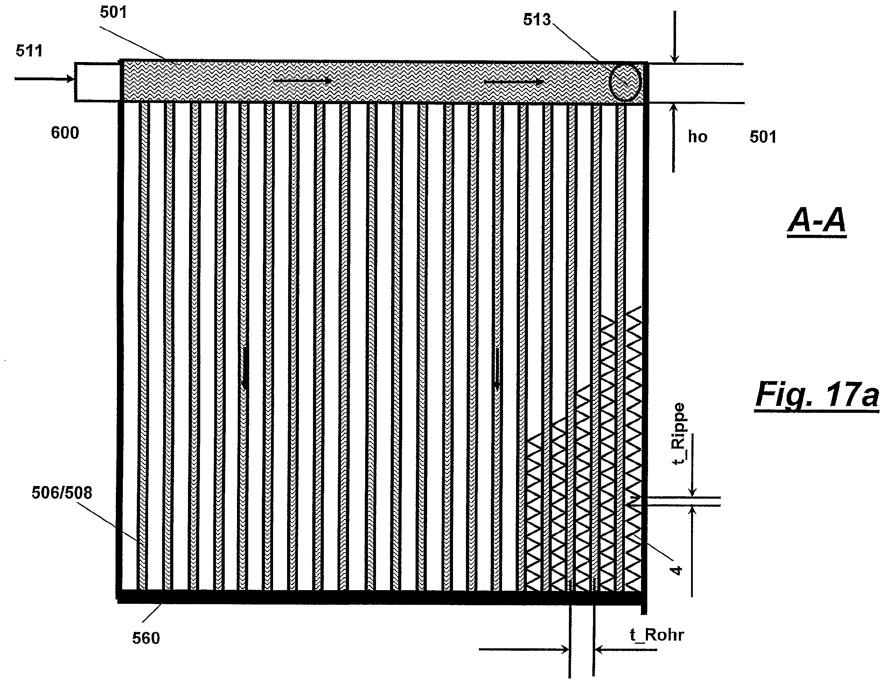

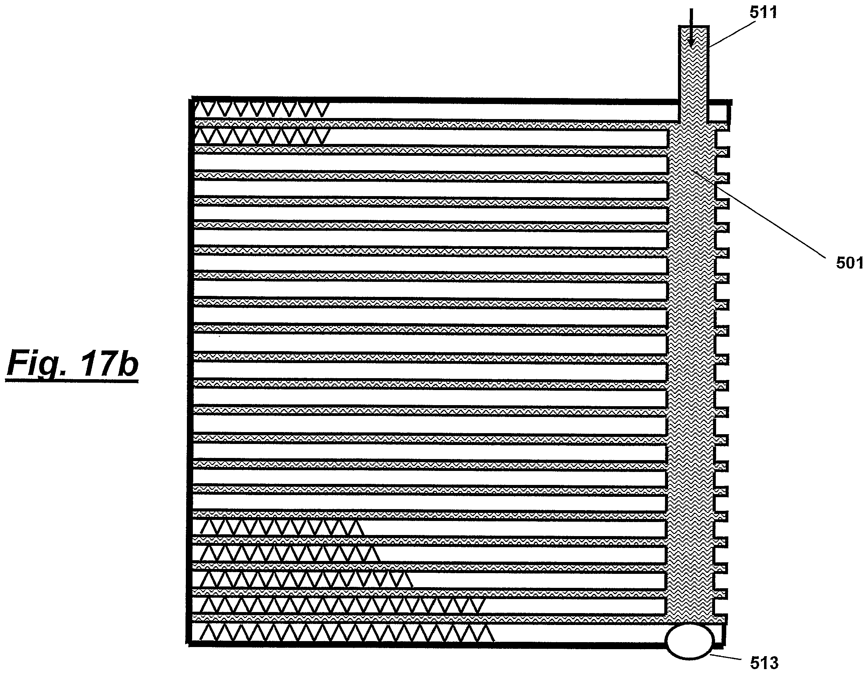

Wie in Fig. 16, 17 gezeigt, erfolgt vorzugsweise die Überströmung von Stufe 2 nach Stufe 3 nicht - wie heute in Kfz-Heizungswärmetauschern zur Druckverlustminimierung üblich - über die gesamte Wasserkastenbreite, sondern wenn zur Durchmischung der gesamte Kühlmittelvolumenstrom über eine gemeinsame Bohrung oder eine gemeinsame Verbindungsleitung zum Wasserkasten der nächsten Stufe geleitet wird. Die Kühlmittelzuströmung erfolgt gemäß Fig. 16 über den Einlass 511, die erste Kreuzstromstufe wird durch die Flachrohrreihe 506 mit den Einzelkanälen 506a und 506b gebildet. Die Umlenkung zur 2. Gegenstromstufe erfolgt innerhalb des Doppelrohres 506 mittels des Übertrittsspaltes 506sp. Am Einfachsten wird dies dadurch bewerkstelligt, dass ein Doppelflachrohr 506 mittels Verschweißens der Trennnaht 506tn bis nahe an das Rohrende gebildet wird. Eine kurze Unterbrechung der Schweißnaht von beispielsweise 10-15mm Länge bildet dann an jedem einzelnen Doppelflachrohr die Strömungsumlenkung von Stufe 1 nach Stufe 2 bzw. von Stufe 3 nach Stufe 4. Stirnseitig werden die Doppelrohre 506 und 508 durch das Abdeckblech 560 verschlossen. Die Überleitung von der zweiten zur dritten Kreuzstromstufe erfolgt über die Verbindungsöffnung 513 in welcher zwangsläufig eine Durchmischung und somit thermische Vergleichmäßigung des Kühlmittels vor der dritten Stufe erfolgt. Die Durchmischungsstelle 513 ist bevorzugt in den Wasserkasten 501 integriert. Wichtig ist dabei, dass eine weitgehende Temperaturvergleichmäßigung des Kühlmittels vor der dritten Stufe erfolgt. Je nach Einbaulage und Entlüftungsbedarf sorgt gegebenenfalls eine kleine zusätzliche Entlüftungsbohrung in den Wasserkasten-Trennwänden 550/552 für einen sicheren Betrieb.

Wie auch in der Weiterbildung nach den Figuren 11-15 ist hier ein Überströmkanal 513 vorgesehen, der im einfachsten Fall durch eine Blendenbohrung 513 im Trennblech 551 ausgebildet sein kann, worauf im übrigen Bezug genommen wird. Die mittlere Trennebene 551 des Anschlusswasserkastens 501 kann wiederum einen blendenartigen Strömungsübertritt 513 zwischen Stufe 2 und 3 aufweisen, in welchem das in den ersten beiden Stufen abgekühlte Kühlmittel gedrosselt und gleichzeitig weitgehend homogenisiert wird. Die Umlenkung zwischen Stufe 1 und 2 sowie zwischen Stufe 3 und 4 am anderen kühlmittelseitigen Rohrende der Wärmetauschermatrix kann ohne Quervermischung innerhalb der einzelnen Doppelflachrohre 506 und 508 erfolgen.

Durch die gute Strömungs- und Temperaturgleichverteilung des Wärmetauschers und den Gewinn an Matrix-Volumen durch den Entfall des Umlenkwasserkastens besteht die Möglichkeit zur weiteren Verbesserung des Wärmetauscherwirkungsgrades und/oder zusätzlicher Bauraum für die Maximierung des Wärmetauschermatrixvolumens. Ferner ist der Wärmetauscher besonders einfach zu fertigen.

Ganz besonders vorteilhaft ist dabei eine Anordnung, bei dem der Wärmetauscher beim Ein- und Ausbau parallel zu den Wärmetauscherflachrohren verschoben wird. Verschließt der Anschlusswasserkasten 501 im eingebauten Zustand den Einbauschacht für den Ein- und Ausbau des Heizungswärmetauschers, insbesondere wenn er dabei zumindest teilweise aus dem Heizklimagerät herausragt, so liegen vorzugsweise die Stirnseite und die beiden Heizungswärmetauscherseitenflächen dabei an den strömungsbestimmenden Innenwänden des Heizklimagerätes an und/oder sind dort - gegen Leckageluft an der Wärmetauschermatrix vorbei - abgedichtet. Bei dieser Anordnung ist somit auch eine ganz besonders geringe Versperrung der Luftströmung vorhanden, d.h. der luftseitige Druckverlust ist durch den Entfall des Umlenkwasserkastens 500 und die weitgehend außerhalb des eigentlichen Luftströmungspfades befindliche Anordnung des Anschlusswasserkasten 501 besonders gering, so dass die effektive Wärmetauschermatrixgröße maximal werden kann.

Anstelle zweier Doppelflachrohre kann beispielsweise bei entsprechend großer Stückzahl auch auf eine Plattenbauweise der Flachrohre oder des gesamten Wärmetauschers übergegangen werden. Dabei werden z.B. die Flachrohre 506a, 506b, 508a und 508b mit Trennebenen 506tn und 508tn durch das Zusammenfügen vorgeformter Platten gebildet und die beiden die Vierstufigkeit definierenden Strömungsübertritte 506sp und 508sp werden dadurch ausgebildet, dass die Trennebenen 506tn und 508tn im Nahbereich der Flachrohrenden zur Strömungsumlenkung für die nachfolgende Gegenstromstufe eine Unterbrechung aufweisen. Der Anschlusswasserkasten kann dabei entsprechend zu Fig. 16 dadurch gebildet werden, dass die einzelnen Flachrohrkanäle in ein entsprechendes Lochbild eines Wasserkastenbodens eingebaut und abgedichtet sind und dass die Trennebenen 550, 551 und 552 mittels Trennblechen bzw. Trennwänden und eines Wasserkastendeckels mit den Kühlmittelanschlüssen 511 und 512 gebildet werden.

Auf Figur 14 wird auch im Hinblick auf dieses Ausführungsbeispiel Bezug genommen, die entsprechend gilt.

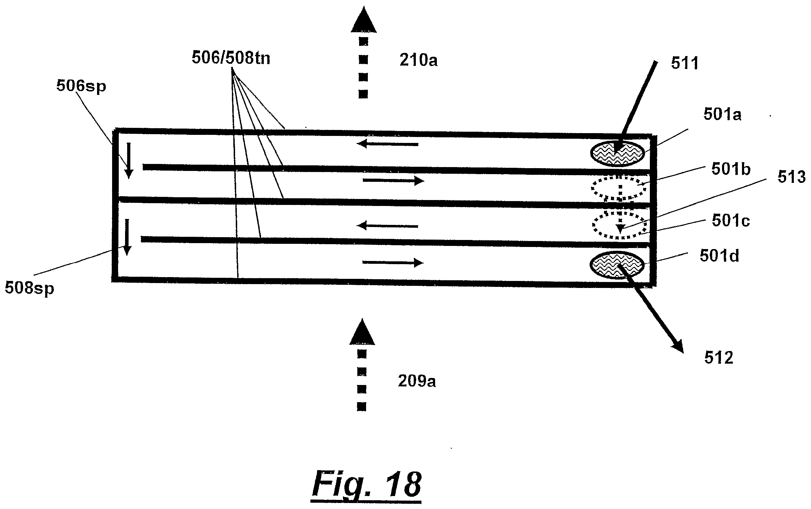

Fig. 17, 18 zeigen eine weitere besonders vorteilhafte Ausgestaltung in Form eines Plattenwärmetauschers. Dabei wird der Anschlusswasserkasten 501 dadurch gebildet, dass die einzelnen Flachrohrkanäle so geformt sind, dass das Zusammenfügen der einzelnen wasserseitigen Wärmetauscherplatten gleichzeitig die Flachrohrkanäle 506a, 506b, 508a, 508b mit deren Übertrittsstellen 506sp und 508sp und die vier Sammelrohre 501a, 501b, 501c und 501d bilden. Das Sammelrohr 501a dient als Anschluss für den Kühlmittelzufluss, das Sammelrohr 501d als Anschluss für den Kühlmittelabfluss und die Überströmverbindung 513 nimmt die Drosselung und weitgehende Durchmischung des im Sammelrohr 501b gesammelten Kühlmittels der zweiten Gegenstromstufe vor dem Eintritt in das Sammelrohr 501c der dritten Gegenstromstufe vor. Auch hier erfolgt zwischen Stufe 2 und 3 ganz bewusst ein Sammeln des Kühlmittels und ein Durchmischen vor dem Einströmen in die dritte Stufe, um eine gewisse Drosselung und gleichzeitig eine möglichst gute Temperaturgleichverteilung sicherzustellen.

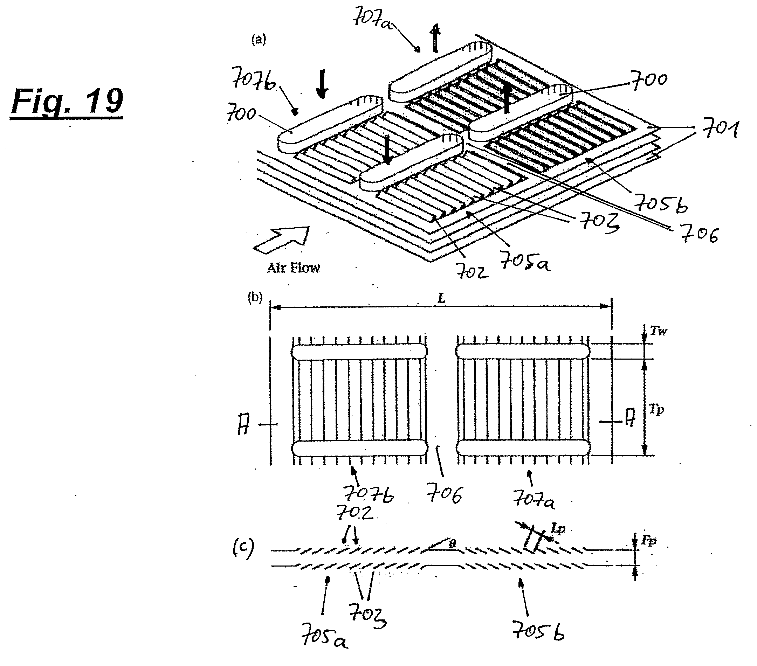

Figur 19 zeigt schematisch einen Ausschnitt eines Wärmetauschers in perspektivischer Ansicht (Fig. 19a), in Draufsicht (Fig. 19b) und im Querschnitt (Fig. 19c) entlang der der Linie A-A. Die kühlmittelseitigen Flachrohren 700, von denen nur Abschnitte dargestellt sind, weisen luftseitige Wärmetauscherrippen 701 auf, die die Flachrohre miteinander verbinden können, welche in Pfeilrichtung (schwarze Pfeile) durch Kühlmittel durchströmbar sind. Die Flachrohre können die die Rippen bildenden Bleche durchziehen. Es versteht sich, dass die Rippen auch auf andere Weise ausgebildet und mit den Flachrohren verbunden sein können, so können die Rippen beispielsweise zickzackförmig ausgebildet sein, wie in den Figuren 13, 15 usw. angedeutet. Die Rippen 701 sind hierbei mit turbulenzerzeugenden Einschnitten 702 versehen, die durch Ausklinkungen 703 aus den Rippen bzw. Blechlagen oder gegebenenfalls auch Ausnehmungen aus den Rippen ausgebildet sein können. Die Einschnitte benachbarter Bereiche 705a, 705b können in unterschiedlicher Richtung zur Durchströmungsrichtung angestellt sein, wie in Fig. 19c angedeutet. Der Rippenabstand ist hier der Blechlagenabstand quer oder senkrecht zur Strömungsrichtung der Luft (offener Pfeil). Die leeren Zwischenräume 706 zwischen einzelnen Wärmetauscherrohrgruppen 707a, b zählen hierbei mit zum Matrixvolumen.

**Patentansprüche**

1. Personenkraftfahrzeug mit einer Beheizung der Fahrzeugkabine über ein Heiz- Klimagerät (45) mit einem vom flüssigen Kühlmittel der Antriebsmaschine (1) durchströmten Heizungswärmetauscher (4m) mit der Abwärme der flüssigkeitsgekühlten Antriebsmaschine und/oder deren Komponenten, wobei der Heizungswärmetauscher (4m) eine gelötete Wärmeübertragungsmatrix bestehend aus kühlmittelseitigen Flachrohren (3, 506a, 506b, 508a, 508b) und luftseitigen Rippen (701) mit einer Vielzahl in Luftströmungsrichtung nacheinander folgender turblulenzerzeugender Einschnitte, sogenannten "Louvres", (702, 703, 705a, 705b) aufweist, **dadurch gekennzeichnet, dass** der Heizungswärmetausher ein solches Volumen V_Matrix der von der Heizungsluft umspülten Wärmetauschermatrix, einen solchen Mittenabstand der luftseitigen Rippen t_Rippe sowie einen solchen Mittenabstand der Kühlmittelflachrohre t_Rohr aufweist, dass das daraus gebildete spezifische Wärmtauschervolumen V_Spec, gebildet mit der Gleichung V_Spec = V_Matrix / (t_Rohr + (4 * t_Rippe)), einen unteren Grenzwert von 0,180 m$^2$ übersteigt.

**2.** Personenkraftfahrzeug nach Anspruch 1, **dadurch gekennzeichnet, dass** V_spec einen unteren Grenzwert von 0,2 m$^2$ übersteigt.

**3.** Personenkraftfahrzeug nach Anspruch 1 oder 2, **dadurch gekennzeichnet, dass** der Rohrmittenabstand t_Rohr weniger als 7 mm beträgt.

**4.** Personenkraftfahrzeug nach einem der Ansprüche 1 bis 3, **dadurch gekennzeichnet, dass** das Volumen der Heizungswärmetauschermatrix V_Matrix mindestens 1,4 l beträgt und insbesondere dass das Volumen der Heizungswärmetauschermatrix im Bereich zwischen 1,4 und 2,5 l liegt.

**5.** Personenkraftfahrzeug nach einem der Ansprüche 1 bis 4, **dadurch gekennzeichnet, dass** der Heizungswärmetauscher (4m) aus mindestens einer Stufe, bevorzugt aber zwei oder mehr Stufen (206, 207, 208) aufgebaut ist und die Vielzahl turbulenzerzeugender Einschnitte (702, 703, 705a, 705b) quer zur Luftströmung angeordnet sind , wobei der Rippenmittenabstand t_Rippe weniger als 1,3 mm ist.

**6.** Personenkraftfahrzeug nach einem der Ansprüche 1 bis 5, **dadurch gekennzeichnet, dass** der Mittenabstand der parallel durchströmten luftseitigen Wärmeübertragungsrippen (701) t_Rippe weniger als 1,0 mm beträgt.

**7.** Personenkraftfahrzeug nach einem der Ansprüche 1 bis 6, **dadurch gekennzeichnet, dass** die kühlmittelseitigen Strömungskanäle (3, 206, 207, 208) eine Kanalhöhe von weniger als 1mm aufweisen.

**8.** Personenkraftfahrzeug nach Anspruch 1, **dadurch gekennzeichnet, dass** das Volumen der Heizungswärmetauschermatrix V_Matrix größer als 2,0 l ist, der Mittenabstand der luftseitigen Wärmeübertragungsrippen (701) t_Rippe kleiner als 0,8 mm, der Mittenabstand der parallel durchströmten kühlmittelseitigen Strömungskanäle (3, 206, 207, 208) t_Rohr 9-11 mm beträgt und dass die kühlmittelseitigen Strömungskanäle eine Kanalhöhe von 1-1,5 mm aufweisen.

**9.** Personenkraftfahrzeug nach einem der Ansprüche 1-8, **dadurch gekennzeichnet, dass** der Heizungswärmetauscher (4m) aus mindestens zwei, bevorzugt 3 oder 4, Kreuzstromwärmetauschern im Kreuzgegenstrom aufgebaut ist, und dass das Kühlmittel vor oder bei der Überleitung von einer Wärmetauscherstufe zur in Luftströmungsrichtung gesehen nächsten Wärmetauscherstufe mit Querschnittsverengungen (313, 513, 506sp, 508sp) durchmischt und gedrosselt wird.

**10.** Personenkraftfahrzeug nach Anspruch 9, **dadurch gekennzeichnet, dass** der gesamte Kühlmittelvolumenstrom eines ersten Wasserkastens (300) der ersten Stufe (206) durch eine Bohrung (313, 513) oder eine Verbindungsleitung (202c) zum nachfolgenden Wasserkasten (301) der in Luftströmungsrichtung gesehen nächsten Stufe (207) geleitet wird.

**11.** Personenkraftfahrzeug nach Anspruch 9, **dadurch gekennzeichnet, dass** das Kühlmittelvolumen eines ersten Wasserkastens durch genau zwei Bohrungen oder zwei Verbindungsleitungen zum nachfolgenden Wasserkasten der nächsten Stufe geleitet wird und dass ein Trennblech (351, 551) im Wasserkasten die beiden Strömungspfade trennt.

**12.** Personenkraftfahrzeug nach Anspruch 9, **dadurch gekennzeichnet, dass** die Querschnittsverengungen in Form einer Bohrung (313, 513) oder Verbindungsleitung (202c) beim Übergang zur letzten und somit kühlmittelseitig kältesten Stufe angeordnet sind.

**13.** Personenkraftfahrzeug nach einem der Ansprüche 1 bis 12, **dadurch gekennzeichnet, dass** der Heizungswärmetauscher aus mindestens 2 in Reihe geschalteten Kreuzstromwärmetauschern mit spezifischen Einzel-Leistungen von mehr als 8,0 kW pro Liter Wärmetauschermatrixvolumen bei jeweils 100 K Eintrittstemperaturdifferenz und bei 6 kg/min Luftmassenstrom und 10 l/min Kühlmitteldurchsatz aufgebaut ist, wobei die spezifische Leistung des Heizungswärmetauschers bei gleichen Randbedingungen von 100K Eintrittstemperaturdifferenz am Gesamtheizungswärmetauscher, 6kg/min Luft, 10 l/min Kühlmittel, durch die Reihenschaltung auf weniger als 7,1 kW pro Liter Wärmetauschermatrixvolumen gesenkt wird.

**14.** Personenkraftfahrzeug nach einem der Ansprüche 1 bis 13, **dadurch gekennzeichnet, dass** der Heizungswärmetauscher (4m) eine Bautiefe der Wärmetauschermatrix in Luftströmungsrichtung von mehr als 48 mm und/oder einen isothermen luftseitigen Druckverlust von mehr als 200Pa bei 6 kg/min Luft von 25°C aufweist.

15. Personenkraftfahrzeug nach einem der Ansprüche 1 bis 13, **dadurch gekennzeichnet, dass** der Heizungswärmetauscher (4m) eine Bautiefe der Wärmetauschermatrix in Luftströmungsrichtung von mehr als 48 mm und einen isothermen kühlmittelseitigen Druckverlust von mehr als 40 mbar bei einem Kühlmitteldurchsatz von 5 l/min und bei einer Kühlmitteltemperatur von 80°C aufweist.

16. Personenkraftfahrzeug nach Anspruch 1 mit einem Leergewicht von mehr als 1400 kg, **dadurch gekennzeichnet, dass** der Heizungswärmetauscher (4m) ein Flachrohr-Rippen-Matrixvolumen V_Matrix von mehr als 1,48 l, einen Rohrmittenabstand t_Rohr von weniger als 6,5 mm und einen Rippenmittenabstand t_Rippe von weniger als 1,3 mm aufweist.

17. Verfahren zum Betrieb eines Personenkraftfahrzeugs nach einem der Ansprüche 1 bis 16, **dadurch gekennzeichnet, dass** der Hauptkühlmittelstrom zur Kühlung einer Verbrennungskraftmaschine in einer ersten Betriebsart mit geringer Abwärme beispielsweise weniger als 5 kW, 10 kW oder weniger als 20 kW primär durch den Heizungswärmetauscher (4m) strömt und in einer zweiten Betriebsart mit hoher Abwärme und/oder hoher Kühlmitteltemperatur von beispielsweise 10 K, 15K oder 20K oberhalb der frühesten im Fahrzeug einstellbaren oder thermostatisch voreingestellten Öffnungstemperatur des Fahrzeugkühlerzweigs auch durch den Fahrzeugkühler (8) und/oder den Kühlerbypaß (6b) strömt und dass in der zweiten Betriebsart im leerlaufnahen Drehzahlbereich der Verbrennungskraftmaschine (1) auch bei maximalem Kabinenheizbedarf weniger als 2,5 l/min Kühlmittel durch den Heizungswärmetauscher (4m) strömen.

## Claims

1. Passenger motor vehicle with a system for heating the vehicle cabin via a heater/air conditioner (45) with a heating system heat exchanger (4m) through which the liquid coolant of the engine (1) flows with the waste heat of the liquid-cooled engine and/or the components thereof, wherein the heating system heat exchanger (4m) has a soldered heat transfer matrix consisting of coolant-side flat pipes (3, 506a, 506b, 508a, 508b) and air-side fins (701) with a plurality of turbulence-generating recesses, so-called "louvres", (702, 703, 705a, 705b) that follow one another in the air flow direction, **characterized in that** the heating system heat exchanger has a volume V_Matrix of the heat exchanger matrix around which the heating air flows, a centre-to-centre distance of the air-side fins t_Rippe as well as a centre-to-centre distance of the flat coolant pipes t_Rohr such that the specific heat exchanger volume V_Spec formed therefrom, calculated using the equation V_Spec = V_Matrix / (t_Rohr + (4 * t_Rippe)), exceeds a lower limit value of 0.180 $m^2$.

2. Passenger motor vehicle according to claim 1, **characterized in that** V_spec exceeds a lower limit value of 0.2 $m^2$.

3. Passenger motor vehicle according to claim 1 or 2, **characterized in that** the pipe centre-to-centre distance t_Rohr is less than 7 mm.

4. Passenger motor vehicle according to one of claims 1 to 3, **characterized in that** the volume of the heating system heat exchanger matrix V_Matrix is at least 1.4 l and in particular **in that** the volume of the heating system heat exchanger matrix lies in the range between 1.4 l and 2.5 l.

5. Passenger motor vehicle according to one of claims 1 to 4, **characterized in that** the heating system heat exchanger (4m) is made up of at least one stage, but preferably two or more stages (206, 207, 208) and the plurality of turbulence-generating recesses (702, 703, 705a, 705b) are arranged transverse to the air flow, wherein the fin centre-to-centre distance t_Rippe is less than 1.3 mm.

6. Passenger motor vehicle according to one of claims 1 to 5, **characterized in that** the centre-to-centre distance of the air-side heat transfer fins (701) t_Rippe flowed through in parallel is less than 1.0 mm.

7. Passenger motor vehicle according to one of claims 1 to 6, **characterized in that** the coolant-side flow channels (3, 206, 207, 208) have a channel height of less than 1 mm.

8. Passenger motor vehicle according to claim 1, **characterized in that** the volume of the heating system heat exchanger matrix V_Matrix is greater than 2.0 l, the centre-to-centre distance of the air-side heat transfer fins (701) t_Rippe is smaller than 0.8 mm, the centre-to-centre distance of the coolant-side flow channels (3, 206, 207, 208) t_Rohr flowed through in parallel is 9-11 mm and **in that** the coolant-side flow channels have a channel height of from 1-1.5 mm.

9. Passenger motor vehicle according to one of claims 1-8, **characterized in that** the heating system heat exchanger (4m) is made up of at least two, preferably 3 or 4, cross-flow heat exchangers in cross counterflow, and **in that**, before or during the crossover from one heat exchanger stage to the next heat exchanger stage, seen in the air flow direction, the coolant is mixed and constricted using cross-sectional constrictions (313, 513, 506sp, 508sp).

10. Passenger motor vehicle according to claim 9, **characterized in that** the whole coolant volume flow of a first water tank (300) of the first stage (206) is conveyed through a drilled hole (313, 513) or a connecting pipe (202c) to the following water tank (301) of the next stage (207), seen in the air flow direction.

11. Passenger motor vehicle according to claim 9, **characterized in that** the coolant volume of a first water tank is conveyed through precisely two drilled holes or two connecting pipes to the following water tank of the next stage and **in that** a separating plate (351, 551) in the water tank separates the two flow paths.

12. Passenger motor vehicle according to claim 9, **characterized in that** the cross-sectional constrictions in the form of a drilled hole (313, 513) or connecting pipe (202c) are arranged at the transition to the last and thus coldest stage on the coolant side.

13. Passenger motor vehicle according to one of claims 1 to 12, **characterized in that** the heating system heat exchanger is made up of at least 2 cross-flow heat exchangers that are connected in series and have specific individual outputs of more than 8.0 kW per litre of heat exchanger matrix volume at in each case 100 K inlet temperature difference and at 6 kg/min air mass flow rate and 10 l/min coolant flow rate, wherein the specific output of the heating system heat exchanger at the same boundary conditions of 100 K inlet temperature difference at the whole heating system heat exchanger, 6 kg/min air, 10 l/min coolant, is lowered to less than 7.1 kW per litre of heat exchanger matrix volume due to the series connection.

14. Passenger motor vehicle according to one of claims 1 to 13, **characterized in that** the heating system heat exchanger (4m) has an overall depth of the heat exchanger matrix in the air flow direction of more than 48 mm and/or an isothermal air-side pressure loss of more than 200 Pa at 6 kg/min 25°C air.

15. Passenger motor vehicle according to one of claims 1 to 13, **characterized in that** the heating system heat exchanger (4m) has an overall depth of the heat exchanger matrix in the air flow direction of more than 48 mm and an isothermal coolant-side pressure loss of more than 40 mbar at a coolant flow rate of 5 l/min and at a coolant temperature of 80°C.

16. Passenger motor vehicle according to claim 1 with an unladen weight of more than 1400 kg, **characterized in that** the heating system heat exchanger (4m) has a flat pipe-fin matrix volume V_Matrix of more than 1.48 l, a pipe centre-to-centre distance t_Rohr of less than 6.5 mm and a fin centre-to-centre distance t_Rippe of less than 1.3 mm.

17. Method for operating a passenger motor vehicle according to one of claims 1 to 16, **characterized in that** the main coolant flow for cooling an internal combustion engine in a first mode of operation with low waste heat of for example less than 5 kW, 10 kW or less than 20 kW flows primarily through the heating system heat exchanger (4m) and in a second mode of operation with high waste heat and/or high coolant temperature of for example 10 K, 15 K or 20 K above the earliest opening temperature of the vehicle radiator branch settable in the vehicle or preset thermostatically also flows through the vehicle radiator (8) and/or the radiator bypass (6b) and **in that** in the second mode of operation in the close-to-idling rpm range of the internal combustion engine (1) less than 2.5 l/min coolant flow through the heating system heat exchanger (4m) even at a maximum cabin heating requirement.

**Revendications**

1. Véhicule de tourisme avec un chauffage de l'habitacle du véhicule par un appareil de chauffage et de climatisation (45) avec un échangeur de chaleur de chauffage (4m) traversé par le liquide de refroidissement de l'appareil moteur (1) avec la chaleur perdue de l'appareil moteur refroidi par liquide et/ou de ses composants, cependant que l'échangeur de chaleur de chauffage (4m) présente une matrice de transfert de chaleur brasée qui consiste en des tubes plats du côté du liquide de refroidissement (3, 506a, 506b, 508a, 508b) et des nervures côté air (701) avec une multitude d'entailles génératrices de turbulences qui se succèdent dans le sens de l'écoulement d'air, ce qu'il est convenu d'appeler des louvres (702, 703, 705a, 705b), **caractérisé en ce que** l'échangeur de chaleur de chauffage présente un tel volume V_Matrix de la matrice d'échangeur de chauffage baignée par l'air de chauffage, un tel entraxe des nervures côté air t_Rippe ainsi qu'un tel entraxe des tubes plats de liquide de refroidissement t_Rohr que le volume d'échangeur de chaleur spécifique ainsi formé V_Spec, formé avec l'équation V Spec=V_Matrix /(t_Rohr + (4*t_Rippe)) dépasse un seuil inférieur de 0,180 m$^2$.

**2.** Véhicule de tourisme selon la revendication 1, **caractérisé en ce que** V_Spec dépasse un seuil inférieur de 0,2 m$^2$.

**3.** Véhicule de tourisme selon la revendication 1 ou 2, **caractérisé en ce que** l'entraxe des tubes t_Rohr est inférieur à 7 mm.

**4.** Véhicule de tourisme selon l'une des revendications 1 à 3, **caractérisé en ce que** le volume de la matrice de l'échangeur de chaleur de chauffage V_Matrix est d'au moins 1,4 l et en particulier que le volume de la matrice de l'échangeur de chaleur de chauffage se situe dans la plage entre 1,4 l et 2,5 l.

**5.** Véhicule de tourisme selon l'une des revendications 1 à 4, **caractérisé en ce que** l'échangeur de chaleur de chauffage (4m) est constitué par au moins un étage, mais de préférence par deux ou plusieurs étages (206, 207, 208) et la multitude d'entailles génératrices de turbulences (702, 703, 705a, 705v) est placée transversalement par rapport à l'écoulement d'air, cependant que l'entraxe des nervures t_Rippe est inférieur à 1,3 mm.

**6.** Véhicule de tourisme selon l'une des revendications 1 à 5, **caractérisé en ce que** l'entraxe des nervures de transfert de chaleur côté air traversées parallèlement (701) t_Rippe est inférieur à 1,0 mm.

**7.** Véhicule de tourisme selon l'une des revendications 1 à 6, **caractérisé en ce que** les canaux d'écoulement du côté du liquide de refroidissement (3, 206, 207, 208) présentent une hauteur de canal inférieure à 1 mm.

**8.** Véhicule de tourisme selon la revendication 1, **caractérisé en ce que** le volume de la matrice d'échangeur de chaleur de chauffage V_Matrix est supérieur à 2,0 l, l'entraxe des nervures de transfert de chaleur côté air (701) t_Rippe est inférieur à 0,8 mm, l'entraxe des canaux d'écoulement du côté du liquide de refroidissement traversés parallèlement (3, 206, 207, 208) t_Rohr est de 9 à 11 mm et que les canaux d'écoulement du côté du liquide de refroidissement présentent une hauteur de canal de 1 à 1,5 mm.

**9.** Véhicule de tourisme selon l'une des revendications 1 à 8, **caractérisé en ce que** l'échangeur de chaleur de chauffage (4m) est constitué par au moins deux, de préférence trois ou quatre, échangeurs de chaleur à flux croisé à contrecourant croisé et que le liquide de refroidissement est mélangé et réduit avant ou lors du transfert d'un étage d'échangeur de chaleur au prochain étage d'échangeur de chaleur, ceci étant vu dans le sens de l'écoulement d'air, avec des rétrécissements de section (313, 513, 506sp, 508sp).

**10.** Véhicule de tourisme selon la revendication 9, **caractérisé en ce que** l'ensemble du flux volumique d'un premier réservoir d'eau (300) du premier étage (206) est guidé à travers une forure (313, 513) ou une conduite de raccordement (202c) vers le réservoir d'eau suivant (301) du prochain étage (207), ceci étant vu dans le sens de l'écoulement d'air.

**11.** Véhicule de tourisme selon la revendication 9, **caractérisé en ce que** le volume du liquide de refroidissement d'un premier réservoir d'eau est guidé par exactement deux forures ou deux conduites de raccordement vers le réservoir d'eau suivant du prochain étage et qu'une tôle de séparation (351, 551) dans le réservoir d'eau sépare les deux trajets d'écoulement.

**12.** Véhicule de tourisme selon la revendication 9, **caractérisé en ce que** les rétrécissements de section en forme de forure (313m, 513) ou de conduite de raccordement (202c) sont placés au niveau de la transition vers le dernier étage et donc l'étage le plus froid du côté du liquide de refroidissement.

**13.** Véhicule de tourisme selon l'une des revendications 1 à 12, **caractérisé en ce que** l'échangeur de chaleur de chauffage (4m) est constitué par au moins deux échangeurs de chaleur à flux croisé connectés en série avec des puissances individuelles spécifiques de volume de matrice d'échangeur de chaleur de plus de 8,0 kW par litre pour respectivement 100 K de différence de température d'entrée et pour un débit massique d'air de 6 kg/min et un débit de circulation de liquide de refroidissement de 10 l/min, cependant que la puissance spécifique de l'échangeur de chaleur de chauffage est réduite, pour les mêmes conditions limites de 100 K de différence de température d'entrée à l'échangeur de chaleur de chauffage total, de 6 kg/min d'air, de 10 l/min de liquide de refroidissement, par la connexion en série à moins de 7,1 kW par litre de volume de matrice d'échangeur de chaleur.

14. Véhicule de tourisme selon l'une des revendications 1 à 13, **caractérisé en ce que** l'échangeur de chaleur de chauffage (4m) présente une profondeur de construction de la matrice d'échangeur de chaleur dans le sens de l'écoulement d'air supérieure à 48 mm et/ou une perte de pression isotherme côté air supérieure à 200 Pa pour 6 kg/min d'air de 25°C.

15. Véhicule de tourisme selon l'une des revendications 1 à 13, **caractérisé en ce que** l'échangeur de chaleur de chauffage (4m) présente une profondeur de construction de la matrice d'échangeur de chaleur dans le sens de l'écoulement d'air supérieure à 48 mm et/ou une perte de pression isotherme du côté du liquide de refroidissement de plus de 40 mbar pour un débit de circulation de liquide de refroidissement de 5 l/min et pour une température du liquide de refroidissement de 80°C.

16. Véhicule de tourisme selon la revendication 1 avec un poids à vide supérieur à 1400 kg, **caractérisé en ce que** l'échangeur de chaleur de chauffage (4m) présente un volume de matrice de tubes plats/nervures V_Matrix supérieur à 1,48 l, un entraxe des tubes t_Rohr inférieur à 6,5 mm et un entraxe des nervures t_Rippe inférieur à 1,3 mm.

17. Procédé pour faire fonctionner un véhicule de tourisme selon l'une des revendications 1 à 16, **caractérisé en ce que** le flux de liquide de refroidissement principal pour le refroidissement d'un moteur à combustion interne traverse, dans un premier mode avec peu de chaleur perdue, par exemple moins de 5 kW ou moins de 20 kW, principalement l'échangeur de chaleur de chauffage (4m) et, dans un second mode, avec une grande quantité de chaleur perdue et/ou une température élevée du liquide de refroidissement de, par exemple, 10 K, 15K ou 20K au-dessus de la température d'ouverture de la branche du radiateur du véhicule la plus précoce réglable dans le véhicule ou préréglée par un thermostat, traverse également le radiateur du véhicule (8) et/ou le bypass du radiateur (6b) et que, dans le second mode, moins de 2m5 l/min de liquide de refroidissement traversent l'échangeur de chaleur de chauffage (4m) dans la plage de vitesse proche du point mort du moteur à combustion interne (1), même pour un besoin de chauffage maximal de l'habitacle.

Fig. 1

**_Fig. 2_**

*Fig. 3*

t_Rippe

t_Rohr

EP 2 140 219 B1

| | | Ford Ka | Ford Fiesta | Golf V | Ford Focus 2002 MY | Ford Focus II / C-Max | Audi A3 | DC A-Klasse | Golf Plus | Audi A4 | BMW 3er | Honda Odysse | BMW 5er | DC E-Klasse |
|---|---|---|---|---|---|---|---|---|---|---|---|---|---|---|
| Fahrzeug-Leergewicht (m) | [kg] | 800 | 1150 | 1340 | 1360 | 1380 | 1430 | 1460 | 1470 | 1480 | 1480 | 1930 | 1960 | 2000 |
| Matrix-Volumen (V_Matrix) | [dm^3] | 0,908 | 0,908 | 1,132 | 1,491 | 1,606 | 1,132 | 1,132 | 0,723 | 1,466 | 0,976 | 1,016 | 0,930 | 0,987 |
| Tiefe_Matrix (in Luftströmungsrichtung) | [m] | 0,018 | 0,018 | 0,034 | 0,042 | 0,045 | 0,034 | 0,034 | 0,027 | 0,042 | 0,027 | 0,021 | 0,026 | 0,026 |
| Rohr-Mittenabstand (t_Rohr) | [m] | 0,00895 | 0,00895 | 0,0105 | 0,00895 | 0,009 | 0,0105 | 0,0105 | 0,0052 | 0,01075 | 0,0052 | 0,00526 | 0,00642 | 0,00642 |
| Rippen-Mittenabstand (t_Rippe) | [m] | 0,00075 | 0,00091 | 0,00113 | 0,00098 | 0,00116 | 0,00113 | 0,00113 | 0,00128 | 0,00113 | 0,00085 | 0,00077 | 0,00098 | 0,00098 |
| **Spezifisches HWT-Matrixvolumen (=V_spec = V_Matrix / (t_Rohr + 4 * t_Rippe))** | [m^2] | **0,076** | **0,072** | **0,075** | **0,116** | **0,118** | **0,075** | **0,075** | **0,070** | **0,096** | **0,113** | **0,122** | **0,090** | **0,095** |

## *Fig. 4*

*Fig. 5*

*Fig. 6*

*Fig. 7a*

*Fig. 7b*

*Fig. 8*

*Fig. 9*

*Fig. 10*

*Fig. 11*

EP 2 140 219 B1

Fig. 12

A-A

*Fig. 13*

401

209a

210a

*Fig. 14*

400

312

311

313

_A-A_

_Fig. 15_

EP 2 140 219 B1

*Fig. 16*

*A-A*

*Fig. 17a*

EP 2 140 219 B1

**_Fig. 17b_**

EP 2 140 219 B1

*Fig. 18*

Fig. 19

**IN DER BESCHREIBUNG AUFGEFÜHRTE DOKUMENTE**

**In der Beschreibung aufgeführte Patentdokumente**

- US 5482112 A